# FASCICULE DE BREVET EUROPEEN

(11) **EP 4 435 615 B1**
(45) Date de publication et mention de la délivrance du brevet: **23.07.2025**
(21) Numéro de dépôt: 24160346.3
(22) Date de dépôt: 28.02.2024
(51) Int. Cl.: G06F 12/14, G06F 12/0864

(54) **PROCÉDÉ DE GESTION D'UNE MÉMOIRE CACHE**
VERFAHREN ZUR VERWALTUNG EINES CACHE-SPEICHERS
METHOD FOR MANAGING A CACHE MEMORY

(30) Priorité: 21.03.2023 FR 2302641
(43) Date de publication de la demande: 25.09.2024
(73) Titulaire: Commissariat à l'Energie Atomique et aux Energies Alternatives, 75015 Paris (FR)
(72) Inventeur: SAVRY, Olivier, 38054 GRENOBLE Cedex 9 (FR)
(74) Mandataire: INNOV-GROUP

(56) Documents cités:
- M. WERNERT. UNTERLUGGAUERL. GINERM. SCHWARZD. GRUSSS. MANGARD: "SCATTERCACHE: Thwarting Cache Attacks via Cache Set Rando-mization", USENIX SECURITY SYMPOSIUM, 2019, pages 675 - 692, XP055705667

## Description

L'invention concerne un procédé et une unité de gestion d'une mémoire cache d'un calculateur électronique.

Les mémoires caches sont utilisées pour qu'un processus exécuté par un microprocesseur puisse accéder plus rapidement à des informations enregistrées initialement dans la mémoire principale.

Dans cette demande, par « processus », on désigne aussi bien un programme qu'une routine de ce programme ou tout autre logiciel exécuté par le calculateur et susceptible de lire ou d'écrire dans la mémoire cache.

L'état de la mémoire cache dépend fortement des adresses qui ont été accédées par le ou les processus exécutés par le calculateur. Par ailleurs, l'état de la mémoire cache à un instant donné peut assez facilement être observé par un processus tiers exécuté par le calculateur ou simplement en mesurant les temps d'accès à la mémoire cache.

Ces caractéristiques d'une mémoire cache ont été exploitées pour développer des attaques connues sous le terme de « attaques par canaux auxiliaires » (« Side Channel Attack » en anglais). Ces attaques permettent de révéler des informations secrètes traitées par un processus exécuté ou de modifier le fonctionnement du processus exécuté pour contourner des mesures de sécurité. Par exemple, une information secrète est une clé cryptographique utilisée pour chiffrer ou déchiffrer des informations. Une mesure de sécurité est, par exemple, la saisie d'un code PIN.

Pour cela, les attaques par canaux auxiliaires observent l'état de la mémoire cache alors que le processus attaqué s'exécute pour déterminer la ou les adresses accédée(s) par ce processus attaqué. Les adresses accédées dépendent de données secrètes traitées par le processus attaqué. Ainsi, connaître les adresses accédées par le processus attaqué permet d'obtenir des informations sur ces données secrètes. En général, ces attaques supposent l'exécution d'un processus attaquant en parallèle du processus attaqué. Ce processus attaquant doit pouvoir accéder à des adresses précises de la mémoire cache. C'est notamment le cas pour l'attaque connue sous le terme anglais de « Prime & Probe » (« Amorcer & sonder »).

Pour augmenter la robustesse de la mémoire cache vis-à-vis de ces attaques, il a été proposé d'éparpiller de façon aléatoire les lignes de la mémoire cache accédées par un processus. Ceci est connu sous le terme de « randomisation spatiale ».

Une telle solution de randomisation spatiale particulièrement efficace est décrite dans l'article suivant : M. Werner, T. Unterluggauer, L. Giner, M. Schwarz, D. Gruss, et S. Mangard, « SCATTERCACHE: Thwarting Cache Attacks via Cache Set Randomization », USENIX Security Symposium, 2019 , pages 675-692. Par la suite, cette solution est désignée par le terme « Scattercache ».

Plus précisément, cet article enseigne que lorsqu'un premier processus cherche à lire un mot à une adresse @r, il transmet une requête à la mémoire cache. Cette requête contient l'adresse @r. L'adresse @r contient une adresse @_{Si,r} d'un ensemble S_{i,r} de lignes de la mémoire cache susceptibles de contenir le mot recherché. Cette adresse @_{Si,r} est souvent désignée par les termes anglais de « set » ou « index ». Dans la solution Scattercache, l'adresse @_{Si,r} est transmise à une fonction cryptographique IDF qui construit, notamment à partir de l'adresse @_{Si,r}, les valeurs de W index de ligne Iw₁ à Iw_{W}, où W est un nombre entier supérieur à un. Chaque index Iwⱼ pointe sur une tableau respectif Wⱼ, où l'indice j est un identifiant du tableau Wⱼ. L'indice j est ici un entier compris entre 1 et W. Ces tableaux Wⱼ sont plus connus sous le terme anglais de « Way ». Chaque tableau Wⱼ contient s lignes distinctes de la mémoire cache. Les tableaux Wⱼ sont distincts les uns des autres, c'est-à-dire qu'ils n'ont aucune ligne en commun. La valeur de l'index Iwⱼ identifie de façon unique une ligne du tableau Wⱼ. L'ensemble S_{i,r} est seulement composé des W lignes identifiées par les valeurs des W index Iwⱼ construites par la fonction IDF.

Si le mot recherché ne se trouve pas dans cet ensemble S_{i,r} de lignes, alors cela provoque un défaut de cache plus connu sous le terme anglais de « miss ». En cas de défaut de cache, un ensemble de nouvelles lignes contenant le mot recherché est chargé dans la mémoire cache à partir de la mémoire principale du calculateur électronique. Les nouvelles lignes chargées sont enregistrées à la place des précédentes lignes de l'ensemble S_{i,r}.

De part l'organisation en tableaux distincts et grâce à l'utilisation d'index Iwⱼ différents pour pointer sur chaque tableau Wⱼ, les lignes de l'ensemble S_{i,r} ne sont pas situées les unes à côté des autres dans la mémoire cache et ne sont pas situées au même emplacement dans chacun des tableaux Wⱼ. Cela permet une randomisation spatiale beaucoup plus importante. Ainsi, l'observation de l'état de la mémoire cache, et en particulier de l'ensemble S_{i,r}, par un processus attaquant est plus difficile.

De plus, la fonction cryptographique IDF est paramétrée par une clé secrète k qu'il est possible de modifier. Cette clé k est gérée par un module matériel du calculateur, ce qui garantie sa confidentialité. Toutefois, en pratique, il n'est pas possible de modifier la clé k au cours de l'exécution d'un processus. En effet, après la modification de la clé k, pour une même adresse @_{Si,r} reçue, les valeurs construites pour chacun des index Iwⱼ sont différentes de celles construites pour cette même adresse @_{Si,r} et pour le même processus avant la modification de la clé k. Autrement dit, après la modification de la clé k, l'adresse @_{Si,r} correspond à un nouvel ensemble S'_{i,r} de lignes et non plus à l'ensemble S_{i,r}. Dès lors, lors du premier accès à l'ensemble S'_{i,r} après la modification de la clé k, le mot auquel le processus souhaite accéder ne se trouve pas dans cet ensemble S'_{i,r} ce qui provoque systématiquement un défaut de cache. De plus, ce défaut de cache se produit systématiquement pour tous les processus exécutés et pour toutes les adresses @S_{i,r} possibles. Ainsi, la modification de la clé k au cours de l'exécution d'un processus, déclenche un très grand nombre de défauts de cache ce qui ralentie substantiellement l'exécution des processus. Pour éviter ce problème, la solution Scattercache propose de changer la clé k uniquement au moment de la mise sous tension du calculateur.

Dans la solution Scattercache, les valeurs des index Iwⱼ sont également calculée à l'aide d'un identifiant SDID. Contrairement à la clé k, l'identifiant SDID est géré par un module logiciel. Ainsi, la sécurité de cet identifiant SDID est moins élevée que celle de la clé k. De plus, de façon similaire à ce qui a été expliqué dans le cas d'une modification de la clé k, une modification de l'identifiant SDID déclenche un grand nombre de défauts de cache. Dès lors, comme pour la clé k, en pratique, l'identifiant SDID ne peut pas être modifié fréquemment.

Du fait des limitations ci-dessus de la solution Scattercache, avec cette solution la randomisation spatiale est statique ou pratiquement statique au cours de l'exécution d'un processus. Dès lors, un processus attaquant peut quand même arriver à identifier les lignes de cache utilisées par un processus attaqué.

L'invention vise à proposer un procédé de gestion de la mémoire cache d'un calculateur électronique plus robuste que la solution Scattercache.

L'invention est exposée dans le jeu de revendications joint.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un calculateur électronique équipé d'une mémoire cache ;
- la figure 2 est une illustration schématique d'une unité de gestion de la mémoire cache du calculateur de la figure 1 ;
- la figure 3 est une illustration schématique de la structure d'une table d'indirection utilisée par l'unité de gestion de la figure 2 ;
- la figure 4 est une illustration schématique de l'architecture d'un circuit cryptographique mis en œuvre dans l'unité de gestion de la figure 2 ;
- la figure 5 est un organigramme d'un procédé de gestion de la mémoire cache du calculateur de la figure 1.

Dans ces figures, les mêmes références sont utilisées pour désigner les mêmes éléments. Dans la suite de cette description, les caractéristiques et fonctions bien connues de l'homme du métier ne sont pas décrites en détails.

Dans cette description des exemples détaillés de modes de réalisation sont d'abord décrits dans un chapitre I en référence aux figures. Ensuite, dans un chapitre II, des variantes de ces modes de réalisation sont introduites. Enfin, les avantages des différents modes de réalisation sont précisés dans un chapitre III.

### Chapitre I : Exemple de mode de réalisation

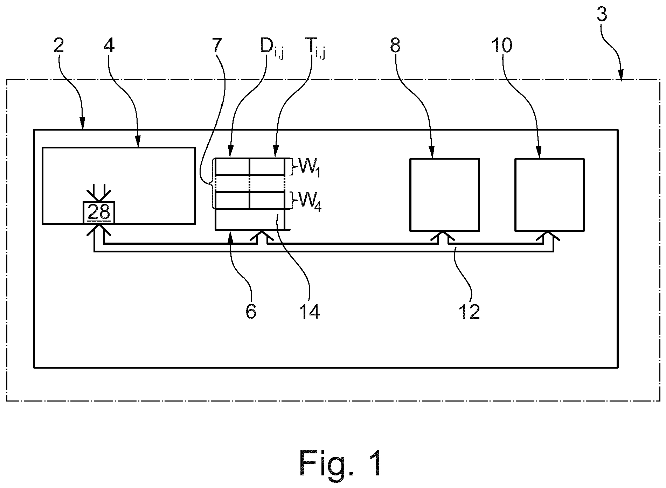

La figure 1 représente schématiquement l'architecture d'un calculateur électronique 2. Ce calculateur 2 est typiquement intégré dans un système 3 plus grand dont il contrôle et commande au moins une partie du fonctionnement. Le système 3 est par exemple un ordinateur, un téléphone mobile, un smartphone ou tout autre appareil électronique dont le fonctionnement est commandé, au moins en partie, par le calculateur 2.

Classiquement, le calculateur 2 comporte :
- au moins un microprocesseur 4,
- une mémoire cache 6,
- une mémoire principale 8,
- une mémoire de masse 10, et
- des bus 12 de transmission d'informations qui raccordent entre eux ces différents éléments du calculateur 2.

La mémoire cache 6 est typiquement plus rapide que la mémoire principale 8 qui est elle-même plus rapide que la mémoire de masse 10. La rapidité d'une mémoire correspond au temps d'accès nécessaire pour accéder à une information enregistrée dans cette mémoire. Actuellement, typiquement, le temps d'accès d'une mémoire cache est inférieur à 30 ns ou 20 ns et, généralement, supérieur à 1 ns. Le temps d'accès à une mémoire principale est aujourd'hui typiquement inférieur à 500 ns ou 100 ns et, généralement, supérieur à 30 ns ou 50 ns. Le temps d'accès à une mémoire de masse est aujourd'hui typiquement supérieur à 1 µs ou 10 µs et, généralement, inférieur à 10 ms.

Typiquement, la taille d'une mémoire du calculateur 2 est d'autant plus petite que cette mémoire est rapide. Ainsi, la taille de la mémoire cache 6 est inférieure à la taille de la mémoire principale 8 qui est elle-même inférieure à la taille de la mémoire de masse 10. La taille d'une mémoire est exprimée en octets. La taille de la mémoire cache 6 est, par exemple, inférieure à 4 Mo et, habituellement supérieure à 60 ko. La taille de la mémoire principale 8 est habituellement supérieure à 256 Mo ou 1 Go et, généralement, inférieure ou égale à 16 Go ou 32 Go. La taille de la mémoire de masse 10 est quant à elle habituellement supérieure à 4 Go ou 1 To.

Ici, les mémoires du calculateur 2 sont classées par temps d'accès croissant. Ainsi, par la suite, l'expression « mémoire de rang supérieur » désigne une mémoire dont le temps d'accès est supérieur à la mémoire courante.

Généralement, les mémoires 6 et 8 sont des mémoires volatiles à accès aléatoire. Par exemple, la mémoire 6 est une mémoire de type SRAM (« Static Random Access Memory »). La mémoire principale 8 est par exemple une mémoire de type DRAM (« Dynamic Random Access Memory »).

La mémoire de masse 10 est généralement une mémoire non volatile. De nombreuses technologies différentes existent pour réaliser une telle mémoire de masse. Par exemple, la mémoire 10 peut être une bande magnétique, un disque dur, un disque optique tel qu'un CD, un DVD ou un disque blue-ray, un disque magnétooptique, une mémoire flash, une mémoire SSD (« Solid State Drive ») ou autres.

La mémoire 10 contient par exemple une copie de sauvegarde du code binaire des processus à exécuter par le microprocesseur 4. La mémoire 10 peut aussi contenir des copies des données à traiter par les différents processus susceptibles d'être exécutés par le microprocesseur 4. Typiquement, le code binaire des processus et les données à traiter sont, par exemple, chargés dans la mémoire 8 à partir de la mémoire 10 lors de la mise sous tension du calculateur 2 et/ou en réponse à une commande de réinitialisation du calculateur 2 ou lorsque l'exécution d'un nouveau processus par le calculateur 2 est déclenchée.

La mémoire 6 peut être une mémoire externe au microprocesseur 4 comme représenté sur la figure 1. Dans ce cas, la mémoire 6 est, par exemple, réalisée sur un substrat mécaniquement séparé du substrat sur lequel sont réalisés les différents éléments du microprocesseur 4.

Pour simplifier la description, on considère ici que la mémoire 6 comporte un seul niveau de mémoire cache, c'est-à-dire typiquement le niveau connu sous l'expression « cache L1 ». Toutefois, tout ce qui est décrit par la suite dans ce cas particulier, est transposable sans difficulté par l'homme du métier au cas des mémoires caches comportant plusieurs niveaux de mémoire cache.

Par la suite à défaut d'indication contraire, on désigne par le terme « mot » aussi bien une instruction ou portion d'instruction du code binaire d'un processus exécutable par le microprocesseur 4 qu'une donnée ou portion de donnée correspondant à une opérande sur laquelle opère une instruction exécutée par microprocesseur 4.

La mémoire cache 6 sert de stockage intermédiaire entre la mémoire principale 8 et le microprocesseur 4. Au lieu d'accéder directement à la mémoire principale 8 qui présente des latences importantes, le microprocesseur 4 va d'abord chercher si le mot est présent dans la mémoire cache. Il existe alors les deux cas de figure suivants :
- Cas 1) : Le mot est présent dans la mémoire cache 6, ce qui correspond au cas connu sous le terme « hit » ou « cache hit ». Dans ce cas, le mot est directement transféré au microprocesseur 4 à partir de la mémoire cache 6. Les mémoires de rang supérieur à la mémoire 6 ne sont alors pas accédées pour obtenir ce mot.
- Cas 2) : Le mot est absent de la mémoire cache 6. Ce cas de figure correspond à celui connu sous le terme anglais de « miss » ou « cache miss ». Dans ce cas, la mémoire cache doit aller chercher dans une mémoire de rang supérieur, c'est-à-dire ici typiquement dans la mémoire principale 8, le mot absent. Ce cas de figure est ici appelé « défaut de cache ». Le défaut de cache conduit donc naturellement à un temps d'accès plus important au mot recherché.

Dans ce mode de réalisation, la mémoire cache 6 est une mémoire associative à W voies ("way" en anglais), plus connue sous l'expression anglaise de « W-way associative ». Dans ce cas, le nombre entier W est supérieur ou égal à deux et généralement inférieur à 128 ou 64 ou 16.

La mémoire cache 6 comporte typiquement un support 7 d'enregistrement d'informations. Le support 7 est divisé en plusieurs lignes L_{i,j} de longueur fixe. Chaque ligne comporte un champ D_{i,j} de données. Chaque champ D_{i,j} est divisé en Nₘ mots de longueur fixe. Les longueurs d'un mot, d'un champ et d'une ligne sont exprimées par le nombre de bits qui les composent. Par exemple, la longueur d'un mot est typiquement égale à 32 bits ou 64 bits. Par la suite, la description est faite dans le cas particulier où la longueur d'un mot est égale à 32 bits. Chaque champ D_{i,j} comporte un nombre identique de mots. Par exemple, ici, chaque champ D_{i,j} comporte quatre mots. Ainsi, la longueur du champ D_{i,j} est de 128 bits.

Les lignes de la mémoire cache 6 sont réparties en W tableaux Wⱼ, où W est un nombre entier supérieur à un. Ici, chaque tableau Wⱼ contient s lignes de la mémoire cache 6, où s est un nombre entier égal à T/(W.L), où :
- T est la taille de la mémoire cache 6 exprimée en octets,
- L est le nombre d'octets par ligne,
- W est le nombre de tableau, et
- le symbole « . » désigne l'opération de multiplication scalaire.

Ces tableaux Wⱼ sont connus sous le terme anglais de «Way ». A titre d'illustration, la suite de cette description est faite dans le cas particulier où W est égal à quatre. Pour simplifier la figure 1, seuls les tableaux W₁ et W₄ ont été représentés. Sur cette figure, les lignes qui ne sont pas représentées sont symbolisées par des pointillés. L'indice j est un identifiant du tableau Wⱼ. L'indice j est compris entre 1 et W. Les lignes L_{i,j} sont toutes contenues dans le tableau Wⱼ. Les tableaux Wⱼ sont distincts les uns des autres, c'est-à-dire qu'une ligne de la mémoire cache 6 est contenue dans un seul de ces tableaux Wⱼ.

Les lignes de la mémoire cache 6 sont également regroupées en ensembles distincts Sᵢ, où l'indice i est un identifiant de l'ensemble Sᵢ parmi tous les autres ensembles de lignes utilisés. Ces ensembles Sᵢ sont connus sous le terme anglais de « Set » ou « Index ». Chaque ensemble Sᵢ contient W lignes L_{i,j} avec chacune des lignes L_{i,j} qui est contenue dans un tableau Wⱼ respectif. Ainsi, la ligne L_{i,j} est une ligne de la mémoire cache 6 qui appartient à la fois à l'ensemble Sᵢ et au tableau Wⱼ.

Chaque ensemble Sᵢ dans la mémoire cache 6 correspond de façon biunivoque à une adresse @_{Si} appelée « adresse d'ensemble de lignes ». Il existe donc ici s adresses @_{Si} différentes d'ensemble de lignes. Par la suite, le nombre de bits minimum nécessaires pour coder l'adresse @_{Si} d'un ensemble Sᵢ est, par exemple, égal à cinq de sorte que s est égal à 2⁵.

La position d'un mot particulier dans le champ D_{i,j} est repérée par un indice « dᵣ » qui identifie la position d'un mot dans la ligne L_{i,j}. L'indice dᵣ est un nombre compris entre 1 et Nₘ. Typiquement, les mots d'un même champ D_{i,j} sont placés immédiatement les uns derrière les autres.

En plus du champ D_{i,j}, chaque ligne L_{i,j} comporte une étiquette de lignes T_{i,j} appelée « tag » en anglais. L'étiquette T_{i,j} contient une valeur qui permet de sélectionner sans ambiguïté la ligne L_{i,j} qui contient le mot recherché parmi les W lignes L_{i,j} de l'ensemble Sᵢ. Pour cela, l'étiquette T_{i,j} est construite à partir des bits de l'adresse @r du mot recherché qui n'ont pas déjà été utilisés pour déterminer l'adresse @_{Si} de l'ensemble Sᵢ susceptible de contenir la ligne L_{i,j} et pour déterminer l'indice dᵣ. Par exemple, une fonction de hachage (« hash » en anglais) peut être appliquée à ces bits de l'adresse du mot recherché pour obtenir l'étiquette T_{i,j}.

La mémoire cache 6 comporte aussi une unité électronique 14 de gestion. Cette unité 14 est notamment configurée pour :
- en réponse à une requête de lecture d'un mot dans la mémoire cache 6, envoyer le mot recherché à l'émetteur de la requête si ce mot a été trouvé dans la mémoire cache 6 et sinon, déclencher un défaut de cache, et
- en réponse à une requête d'écriture d'un mot dans la mémoire cache 6, remplacer l'ancienne valeur de ce mot enregistrée sur le support 7 par sa nouvelle valeur et, dans le cas où le mot à écrire n'a pas pu être trouvé dans la mémoire cache 6, déclencher un défaut de cache.

Par exemple, lorsque l'unité 14 déclenche un défaut de cache, elle émet une requête vers une mémoire de rang supérieur, typiquement ici la mémoire principale 8, pour déclencher le chargement, dans la mémoire cache 6, du mot recherché. L'unité 14 gère ensuite l'enregistrement, dans une ligne L_{i,j}, du mot fourni en réponse à sa requête.

A titre d'illustration, le microprocesseur 4 est conforme à l'architecture RISC (« Restricted Instruction Set Computer »). Le microprocesseur 4 comporte, notamment, une interface 28 d'entrée/sortie de données.

L'interface 28 permet de lire des mots depuis la mémoire 6 et, en alternance, d'écrire des mots dans la mémoire 6. Ici, pour lire un mot, le microprocesseur 4 génère et envoie par l'intermédiaire de l'interface 28 une requête de lecture de ce mot. Cette requête de lecture comporte notamment une adresse @r physique ou virtuelle du mot à lire. L'adresse virtuelle d'un mot est l'adresse de ce mot dans l'espace mémoire du processus exécuté par le microprocesseur 4. Cette adresse virtuelle correspond à une adresse physique dans la mémoire principale 8 où est enregistré le mot recherché. Classiquement, c'est un module de conversion connu sous l'acronyme MMU (« Memory Management Unit ») qui se charge de la conversion des adresses virtuelles en adresses physiques au moment où cela devient nécessaire.

L'adresse @r comporte à cet effet :
- une adresse @_{Si,r} d'un ensemble S_{i,r} de la mémoire cache 6 susceptible de contenir le mot recherché ;
- un indice dᵣ qui identifie la position du mot recherché dans le champ D_{i,j} des W lignes L_{i,j} de l'ensemble S_{i,r} identifié par l'adresse @_{Si,r}, et
- une étiquette Tᵣ qui permet de sélectionner sans ambiguïté, parmi les W lignes L_{i,j} de l'ensemble S_{i,r} correspondant à l'adresse @_{Si,r}, la ligne qui contient le mot recherché si cette ligne existe.

L'étiquette Tᵣ est typiquement construite en mettant en œuvre le même algorithme que celui mis en œuvre pour construire chacune des étiquettes T_{i,j} enregistrées dans la mémoire cache 6. Ainsi, si l'une des lignes L_{i,j} de l'ensemble S_{i,r} contient le mot recherché, son étiquette T_{i,j} est identique à l'étiquette Tᵣ. Cela permet de l'identifier sans ambiguïté comme étant la ligne qui contient le mot recherché parmi les W lignes L_{i,j} de l'ensemble S_{i,r}.

Dans ce mode de réalisation, les requêtes en écriture et en lecture reçues par la mémoire cache 200 comportent en plus :
- un identifiant Idᵤ du processus exécuté par le microprocesseur 4 qui a émis cette requête, et
- un marqueur MP de mémoire partagée qui indique si le mot recherché est ou non partagé avec d'autres processus simultanément exécutés par le calculateur 2.

Typiquement, l'identifiant Idᵤ est un PID (« Process IDentifier ») attribué à tout processus exécuté par le microprocesseur 4. Par exemple, l'identifiant Idᵤ est l'identifiant de processus connu sous l'acronyme ASID (« Adress Space IDentifier »).

Le marqueur MP peut prendre un état actif et un état inactif. Dans l'état actif, il indique que le mot à accéder est partagé entre plusieurs processus simultanément exécutés par le calculateur 2. Un mot partagé est un même mot qui peut être lu et/ou écrit par plusieurs processus différents. Dans l'état inactif, le marqueur MP indique que le mot à lire ou à écrire est uniquement utilisé par le processus qui a généré la requête.

Une requête d'écriture d'un mot dans la mémoire 6 est, par exemple, pratiquement identique à la requête de lecture sauf qu'elle comporte en plus une valeur numérique Vᵣ contenant la nouvelle valeur du mot à enregistrer dans la mémoire cache 6.

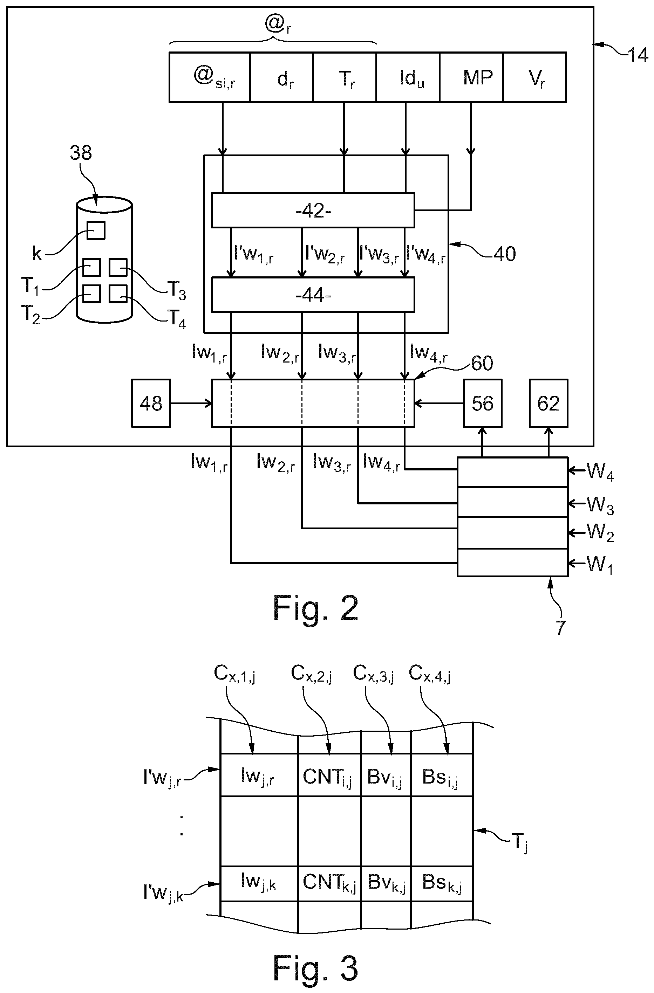

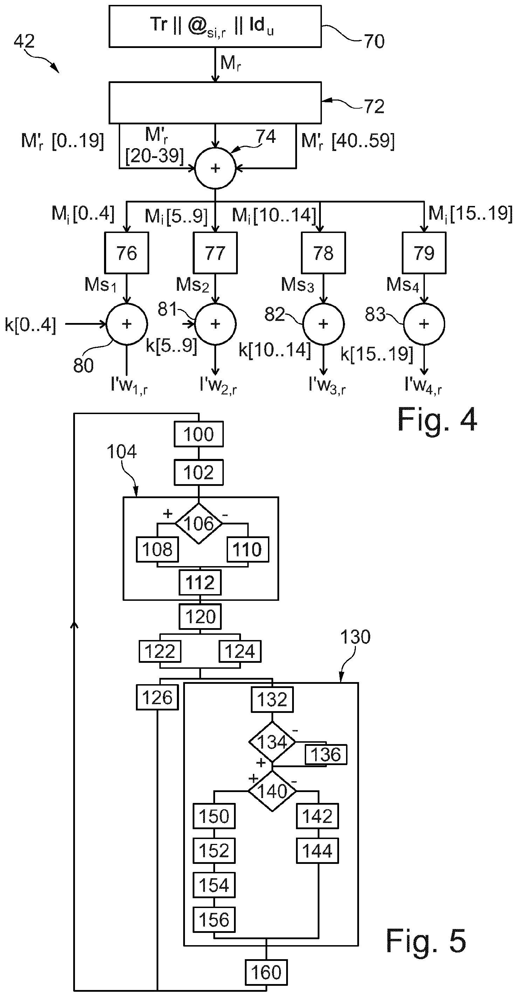

La figure 2 représente plus en détail l'unité 14 de gestion de la mémoire cache 6. L'unité 14 est configurée pour mettre en œuvre le procédé de gestion décrit plus en détail en référence à la figure 5.

L'unité 14 comporte des registres dans lesquels sont enregistrées les différentes données contenues dans la requête de lecture ou d'écriture reçue par la mémoire 6. Sur cette figure, les registres contenant l'étiquette Tᵣ, l'adresse @_{Si,r}, l'indice dᵣ, l'identifiant Idᵤ, le marqueur MP et la valeur Vᵣ portent, respectivement, les références Tᵣ, @_{Si,r}, dᵣ, Idᵤ, MP et Vᵣ.

L'unité 14 comporte une mémoire 38 et un générateur matériel 40 de valeurs Iw_{j,r} pour chacun des index Iwⱼ correspondant à l'adresse @r reçue.

Typiquement, la mémoire 38 est uniquement accessible par les composants de l'unité 14. De préférence, la mémoire 38 est une mémoire non volatile. En particulier, les informations contenues dans la mémoire 38 ne peuvent pas être lues ou écrites par des processus exécutés par le microprocesseur 4. Ici, cette mémoire 38 comporte un clé cryptographique k et W tables Tⱼ d'indirection. Ici, chaque table d'indirection Tⱼ est associée de façon unique à un index respectif, c'est-à-dire ici à l'index Iwⱼ. Par conséquent, dans cet exemple de réalisation, la mémoire 38 comporte quatre tables T₁ à T₄ pour les index, respectivement, Iw₁, à Iw₄. Les structures de toutes les tables Tⱼ sont identiques.

Le générateur 40 exécute une fonction bijective de correspondance qui associe à chaque adresse @_{Si,r} un et un seul jeu de W valeurs Iw_{j,r}. Ce jeu de valeurs Iw_{j,r} correspond à l'ensemble S_{i,r} puisque chaque valeur Iw_{j,r} identifie de façon unique l'une des lignes de l'ensemble S_{i,r}.

Le générateur 40 reçoit, en entrée, l'adresse @_{Si,r}. De plus, dans ce mode de réalisation, il reçoit aussi en entrée, l'étiquette Tᵣ, l'identifiant Idᵤ et le marqueur MP. En sortie, il renvoie, sur une sortie respective, chacune des valeurs Iw_{j,r} générée. A cet effet, le générateur 40 comporte W sorties. Ici, la valeur Iw_{j,r} de chaque index Iwⱼ est comprise entre 1 et s. La valeur Iw_{j,r} correspond donc directement au numéro de la ligne L_{i,j} dans le tableau Tⱼ

Ici, le générateur 40 comporte notamment à cet effet un circuit cryptographique 42 et un circuit 44 de conversion.

Lorsque le marqueur MP indique que le mot n'est pas partagé, le circuit cryptographique 42 génère quatre valeurs intermédiaires I'w_{j,r} en fonction de l'adresse @_{Si,r}, de l'étiquette Tᵣ, de l'identifiant Idᵤ et de la clé k contenue dans la mémoire 38. A l'inverse, lorsque le marqueur MP indique que le mot est partagé, le circuit cryptographique 42 génère quatre valeurs intermédiaires I'w_{j,r} en fonction de l'adresse @_{Si,r} et de la clé k mais sans tenir compte de l'identifiant Idᵤ et, éventuellement, de l'étiquette Tᵣ. Chaque valeur intermédiaire I'w_{j,r} est un entier compris entre un et s.

Le circuit 44 convertit chaque valeur intermédiaire I'w_{j,r} en une valeur finale Iw_{j,r} restituée sur la sortie correspondante du générateur 40. Pour cela, le circuit 44 utilise les tables d'indirection Tⱼ enregistrées dans la mémoire 38. Plus précisément, le circuit 44 utilise la valeur intermédiaire I'w_{j,r} en tant que numéro de ligne pour sélectionner une ligne de la table Tⱼ puis extrait de la ligne sélectionnée la valeur finale Iw_{j,r} correspondante.

L'unité 14 comporte aussi les composants suivants :
- un générateur aléatoire ou pseudo-aléatoire 48 de nombre entier compris entre 1 et s,
- un comparateur 56,
- un automate 60,
- un extracteur 62 de mot

Le comparateur 56 compare l'étiquette Tᵣ reçue aux étiquettes T_{i,j} des lignes de l'ensemble S_{i,r} sélectionné à l'aide de l'adresse @_{Si,r}. Si l'une des étiquettes T_{i,j} de l'ensemble S_{i,r} sélectionné correspond à l'étiquette Tᵣ, alors un signal de sélection de cette ligne L_{i,j} comme étant celle qui contient le mot recherché est généré. Ce signal de sélection correspond donc au cas d'un « hit ». Dans le cas contraire, c'est-à-dire qu'aucune des étiquettes T_{i,j} de l'ensemble S_{i,r} sélectionné ne correspond à l'étiquettes Tᵣ, un signal de défaut de cache est généré. Une étiquette T_{i,j} correspond à l'étiquette Tᵣ si ces deux étiquettes sont identiques.

Le signal de sélection est, en alternance, le signal de défaut de cache est reçu par l'automate 60.

En parallèle du comparateur 56, l'extracteur 62 extrait du champ D_{i,j} de la même ligne L_{i,j} que celle actuellement traitée par le comparateur 56, le mot situé à la position repérée par l'indice reçu dᵣ.

L'automate 60 est notamment configuré pour :
- sélectionner les W lignes L_{i,j} de l'ensemble S_{i,r} correspondant à l'adresse @_{Si,r} à partir des valeurs Iw_{j,r} générées par le générateur 40,
- si l'une des W lignes L_{i,j} sélectionnée déclenche un signal de succès, alors l'automate 60 déclenche en réponse, dans le cas d'une requête de lecture, la transmission du mot extrait, et, dans le cas d'une requête d'écriture, l'écriture de la valeur Vᵣ reçue à l'emplacement du mot situé à la position repérée par l'indice dᵣ dans le champ D_{i,j} de cette ligne, et
- charger à partir de la mémoire principale 8 et enregistrer dans la mémoire cache 6 le mot correspondant à l'adresse @r contenue dans la requête reçue si ce mot n'a pas pu être trouvé dans la mémoire cache 6.

La structure de la table Tⱼ est représentée sur la figure 3. La table Tⱼ comporte quatre colonnes et autant de lignes qu'il y a de valeurs possibles pour l'index Iwⱼ. Ici, elle comporte donc s lignes numérotées de 1 à s. L'intersection entre une colonne et une ligne forme une cellule. Chaque cellule est apte à contenir une valeur. Ainsi, chaque ligne de la table Tⱼ comporte quatre cellules C_{x,y,j}, où les indices x et y sont les numéros, respectivement, de la ligne et de la colonne de la table Tⱼ. L'indice x varie de 1 à s et l'indice y varie de un à quatre. Pour simplifier la figure 3, seules deux lignes correspondant aux numéros de ligne, respectivement, I'w_{j,r} et I'w_{j,k} ont été représentées.

La première colonne de la table Tⱼ, c'est-à-dire celle qui contient toutes les cellules C_{x,1,j} contient toutes les valeurs possibles de l'index Iwⱼ. Ici, ces valeurs possibles sont les valeurs entières qui vont de un à s. Ainsi, chaque cellules C_{x,1,j} comporte l'une de ces valeurs. Par exemple, ici, les cellules C_{x,1,j} des lignes I'w_{j,r} et I'w_{j,k} contiennent les valeurs, respectivement, Iw_{j,r} et Iw_{j,k} de l'index Iwⱼ.

La deuxième colonne de la table Tⱼ contient toutes les cellules C_{x,2,j}. Chaque cellule C_{x,2,j} contient un compteur CNT_{i,j} associé à la ligne L_{i,j} identifiée par la valeur de l'index Iwⱼ contenue dans la cellule C_{x,1,j} située sur la même ligne.

La troisième colonne de la table Tⱼ contient toutes les cellules C_{x,3,j}. Chaque cellule C_{x,3,j} contient un bit de validité Bv_{i,j} associé à la ligne L_{i,j} identifiée par la valeur de l'index Iwⱼ contenue dans la cellule C_{x,1,j} située sur la même ligne. Ce bit Bv_{i,j} permet de marquer la ligne L_{i,j} comme étant valide et, en alternance, invalide. Classiquement, une ligne L_{i,j} marquée comme invalide doit être traitée comme si elle ne contenait aucun mots. Ainsi, une ligne L_{i,j} marquée comme invalide est destinée à être effacée et remplacée en priorité par une autre ligne chargée depuis la mémoire principale 8. Ici, lorsque la ligne L_{i,j} est valide, le bit Bv_{i,j} est égal à « 1 ». A l'inverse, le bit Bv_{i,j} est égal à « 0 » lorsque la ligne L_{i,j} est invalide.

La quatrième colonne de la table Tⱼ contient toutes les cellules C_{x,4,j}. Chaque cellule C_{x,4,j} contient un bit sale Bs_{i,j} associé à la ligne L_{i,j} identifiée par la valeur de l'index Iwⱼ contenue dans la cellule C_{x,1,j} située sur la même ligne. Le bit Bs_{i,j} est plus connu sous le nom de bit « dirty ». Le bit Bs_{i,j} permet de marquer cette ligne L_{i,j} comme ayant été modifiée. Lorsqu'une ligne L_{i,j} est marquée comme ayant été modifiée, le champ D_{i,j} qu'elle contient est copié dans la mémoire principale 8 avant, par exemple, que cette ligne soit marquée comme invalide ou évincée de la mémoire cache 6. Ici, lorsque la ligne L_{i,j} a été modifiée, le bit Bs_{i,j} est égal à « 1 ». A l'inverse, le bit Bs_{i,j} est égal à « 0 » lorsque la ligne L_{i,j} n'a pas été modifiée.

La figure 4 représente plus en détail un mode de réalisation possible du circuit 42 dans le cas où le marqueur MP est dans son état inactif. Dans ce mode de réalisation, le circuit 42 comporte un circuit 70 de concaténation, un permutateur 72, un circuit logique « OU Exclusif » 74, quatre circuits 76 à 79 de substitution et quatre circuits logiques « OU Exclusif » 80 à 83.

Le circuit 70 reçoit en entrée l'étiquette Tᵣ, l'adresse @_{Si,r} et l'identifiant Idᵤ et restitue, en sortie, un mot Mᵣ formé par la concaténation des bits de l'étiquette Tᵣ, de l'adresse @_{Si,r} et de l'identifiant Idᵤ. Par exemple, ici l'étiquette Tᵣ, l'adresse @_{Si,r} et l'identifiant Idᵤ sont codés sur, respectivement, 39 bits, 5 bits et 16 bits. Ainsi, le mot Mᵣ formé comporte 60 bits.

Le permutateur 72 permute les bits du mot Mᵣ pour obtenir un mot M'ᵣ puis envoie les vingt premiers bits M'ᵣ[0..19] du mot M'ᵣ sur une première entrée du circuit 74, les vingts bits suivants M'ᵣ[20..39] du mot M'ᵣ sur une deuxième entrée du circuit 74 et les vingt derniers bits M'ᵣ[40..59] du mot M'ᵣ sur une troisième entrée du circuit 74.

Le circuit 74 réalise un « OU Exclusif » ou XOR entre les bits M'ᵣ[0..19], M'ᵣ[20..39] et M'ᵣ[40..59] pour obtenir un mot Mᵢ codé sur vingt bits.

Les cinq premiers bits Mᵢ[0..4] sont envoyés sur une entrée du circuit 76, les cinq bits suivants Mᵢ[5..9] sur une entrée du circuit 77, les cinq bits suivants Mᵢ[10..14] sur une entrée du circuit 78 et les cinq derniers bits Mᵢ[15..19] sur une entrée du circuit 79.

Les circuits 76 à 79 substituent les bits reçus en entrée par d'autres bits pour générer quatre mots Ms, à Ms₄ transmis chacun sur une première entrée, respectivement, des circuit 80 à 83. Par exemple, chaque circuit 76 à 79 est un circuit connu sous le terme de « S-BOX ».

Les circuits 80 à 83 reçoivent sur une seconde entrée, respectivement, les cinq premiers bits k[0..4], les cinq bits suivants k[5..9], les cinq bits suivants k[10..14] et les cinq dernier bits k[15..19] de la clé k.

Les circuits 80 à 83 réalisent chacun un « OU Exclusif » ou XOR et restituent sur leurs sorties, respectivement, les valeurs intermédiaire I'w_{1,r}, I'w_{2,r}, I'w_{3,r} et I'w_{4,r}.

Le fonctionnement du calculateur 2 et de la mémoire cache 6 va maintenant être décrit en référence au procédé de la figure 5.

Lors de la mise sous-tension du calculateur 2, l'ensemble des lignes de la mémoire cache 6 sont marquées comme étant invalides à l'aide du bit Bv_{i,j}. Pour cela, la valeur « 0 » est inscrite dans l'ensemble des cellules C_{x,3,j} de toutes les tables Tⱼ. Par exemple, lors de la première utilisation du calculateur 2, les valeurs numériques de 1 à s sont enregistrées, respectivement, dans les cellules C_{x,1,j} de chaque table Tⱼ. Autrement dit, au début de la première utilisation du calculateur 2, la valeur x est enregistrée dans la cellule C_{x,1,j}. Lors des utilisations suivantes, le contenu des cellules C_{x,1,j} est, par exemple, celui mémorisé à l'issue de la précédente utilisation. Ainsi, lors des utilisations suivantes, les valeurs de 1 à s ne sont pas nécessairement enregistrées dans les cellules C_{x,1,j} dans l'ordre croissant des indices x.

Après la mise sous tension du calculateur 2, l'exécution d'au moins un processus est déclenchée. Le calculateur 2 a ici la capacité d'exécuter simultanément plusieurs processus. Pour cela, par exemple, le calculateur 2 exécute un système d'exploitation qui permet d'ordonnancer dans le temps l'exécution simultanée de ces différents processus par le microprocesseur 4. Grace à cela, tous les processus sont exécutés en alternance par ce même microprocesseur 4. De même, la mémoire cache 6 est accessible et utilisable par tous les processus simultanément exécutés. En particulier, pour augmenter l'efficacité et la rapidité d'exécution de chacun des processus, chacun d'entre eux peut lire et écrire des mots dans n'importe quel emplacement du support 7. Autrement dit, le support 7 n'est pas divisé en plusieurs partitions dont l'usage de chacune de ces partitions serait réservé à un seul processus particulier.

L'exécution de plusieurs processus par un microprocesseur est bien connue de l'homme du métier. Ainsi, seuls les accès et la gestion de la mémoire cache 6 sont décrits plus en détail par la suite.

Lors d'une étape 100, une requête de lecture d'un mot est reçue par l'unité 14. Cette requête est émise par un processus exécuté par le microprocesseur 4. Cette requête de lecture contient notamment l'adresse @r du mot à lire et donc l'étiquette Tᵣ, l'adresse @_{Si,r} et l'indice dᵣ. Elle contient également l'identifiant Idᵤ du processus qui a émis cette requête ainsi que l'état du marqueur MP.

Lors d'une étape 102, l'étiquette Tᵣ, l'adresse @_{Si,r}, l'indice dᵣ , l'identifiant Idᵤ et le marqueur MP sont enregistrés dans les registres, respectivement, Tᵣ, @_{Si,r}, dᵣ, Idᵤ et MP de l'unité 14 de gestion.

Lors d'une étape 104, le générateur 40 génère alors les quatre valeurs Iw_{1,r}, Iw_{2,r}, Iw_{3,r} et Iw_{4,r} des index, respectivement, Iw₁, Iw₂, Iw₃ et Iw₄.

Pour cela, lors d'une opération 106, le circuit 42 vérifie si le marqueur MP reçu est dans son état inactif. Dans l'affirmative, le procédé se poursuit par une opération 108. Dans la négative, le procédé se poursuit par une opération 110.

Lors de l'opération 108, le circuit 42 construit quatre valeurs intermédiaires I'w_{1,r}, I'w_{2,r}, I'w_{3,r} et I'w_{4,r} comme décrit en référence à la figure 4.

L'opération 110 est identique à l'opération 108 sauf que les bits de l'identifiant Idᵤ sont remplacés par une valeur constante prédéterminée et identique pour tous les processus exécutés par le calculateur 2. Par exemple, les bits de l'identifiant Idᵤ sont tous mis à zéro. Dans ce cas, les valeurs intermédiaires générées I'w_{1,r}, I'w_{2,r}, I'w_{3,r} et I'w_{4,r} ne varient pas en fonction de l'identifiant Idᵤ. Dès lors, si deux processus exécutés ont le même espace d'adressage, alors que la requête contenant l'adresse @r soit émise par l'un ou par l'autre de ces processus, les valeurs intermédiaires I'w_{1,r}, I'w_{2,r}, I'w_{3,r} et I'w_{4,r} sont identiques. Dès lors, comme cela sera compris à la lecture de la suite de cette description, l'ensemble S_{i,r} est le même pour ces deux processus puisque les tables Tⱼ sont les mêmes pour tous les processus. Cela permet donc à ces deux processus de partager un mot enregistré dans la mémoire cache 6.

A l'issue de l'opération 108 ou à l'issue de l'opération 110, lors d'une opération 112, le circuit 44 convertit les valeurs intermédiaires I'w_{1,r}, I'w_{2,r}, I'w_{3,r} et I'w_{4,r} générées par le circuit 42 en valeurs finales Iw_{1,r}, Iw_{2,r}, Iw_{3,r} et Iw_{4,r} en utilisant pour cela les tables T₁ à T₄.

Le fonctionnement du circuit 44 est expliqué dans le cas particulier de la conversion d'une valeur intermédiaire I'w_{j,r} en valeur finale Iw_{j,r} à l'aide de la table Tⱼ. Ce qui est décrit dans ce cas particulier est appliqué pour chacune des valeurs de l'indice « j » comprise entre 1 et 4.

Le circuit 44 sélectionne, dans la table Tⱼ, la cellule C_{x,1,j} qui se trouve sur la ligne dont le numéro est égal à la valeur I'w_{j,r}. La valeur finale Iw_{j,r} est alors prise égale à la valeur contenue dans la cellule C_{x,1,j} ainsi sélectionnée. Par exemple, en se référant au contenu de la table Tⱼ représentée sur la figure 3, la cellule C_{x,1,j} ainsi sélectionnée contient la valeur finale Iw_{j,r}.

Ensuite, lors d'une étape 120, l'automate 60 sélectionne dans le support 7, l'ensemble S_{i,r} de W lignes L_{i,j} situé à l'adresse @_{Si,r}. Cet ensemble S_{i,r} est formé par les W lignes identifiées par les W valeurs finales Iw_{j,r} obtenues à l'issue de l'étape 104. Il est rappelé que chaque valeur Iw_{j,r} de l'index Iwⱼ pointe sur une ligne respective dans le tableau Tⱼ. Typiquement, la ligne identifiée par l'index Iwⱼ est celle dont le numéro de ligne est égal à la valeur Iw_{j,r}.

Lors d'une étape 122, le comparateur 56 traite les unes après les autres les W lignes sélectionnées à l'issue de l'étape 120. Successivement, pour chacune des lignes L_{i,j} ainsi sélectionnées, le comparateur 56 compare l'étiquette T_{i,j} de cette ligne à l'étiquette Tᵣ reçue. Le comparateur 56 transmet un signal de succès (« hit ») à l'automate 60 uniquement si, pour la ligne L_{i,j} actuellement traitée, les étiquettes T_{i,j} et Tᵣ sont identiques. Dans tous les autres cas, le comparateur 56 transmet un signal de d'absence de correspondance à l'automate 60.

En parallèle, lors d'une étape 124, l'extracteur 62 lit, dans le champ D_{i,j} de la ligne L_{i,j} actuellement traitée par le comparateur 56, le mot situé à la position repérée par l'indice dᵣ reçu.

En réponse à un signal de succès, lors d'une étape 126, l'automate 60 transmet au microprocesseur 4 le mot extrait lors de l'étape 124 et le procédé retourne à l'étape 100 pour traiter la prochaine requête de lecture.

Si le comparateur 56 a généré un signal d'absence de correspondance pour les W lignes L_{i,j} traitées, l'automate 60 déclenche un défaut de cache. Le procédé se poursuit alors par une étape 130 de fourniture du mot recherché à partir d'une mémoire de rang supérieure.

L'étape 130 débute par une opération 132 de sélection de la ligne à évincer parmi les W lignes actuelles de l'ensemble S_{i,r}. Pour cela, l'automate 60 sélectionne en priorité une ligne de l'ensemble S_{i,r} dont le bit Bv_{i,j} indique qu'elle est invalide. A cet effet, pour chaque ligne L_{i,j} de l'ensemble S_{i,r}, l'automate 60 lit le bit Bv_{i,j} associé à cette ligne L_{i,j} par la table Tⱼ. Plus précisément, l'automate 60 lit le bit Bv_{i,j} contenu dans la cellule C_{x,3,j} de la ligne de la table Tⱼ dont la cellule C_{x,1,j} contient la valeur Iw_{j,r} générée lors de l'étape 104.

Si une seule ligne L_{i,j} de l'ensemble S_{i,r} est associée à un bit Bv_{i,j} qui indique que cette ligne est invalide, alors c'est cette ligne qui est sélectionnée pour être évincée. Sinon, si plusieurs lignes de l'ensemble S_{i,r} sont associées à des bits Bv_{i,j} qui indiquent qu'elles sont invalides, alors l'une quelconque de ces lignes est sélectionnée. Enfin, si toutes les lignes de l'ensemble S_{i,r} sont valides, c'est-à-dire qu'elles sont toutes associées à des bits de validité qui indiquent qu'elles sont valides, alors l'une quelconque de ces lignes est sélectionnée pour être évincée.

Ensuite, lors d'une opération 134, l'automate 60 vérifie l'état du bit « dirty » associé à la ligne à évincer sélectionnée. A cet effet, si la ligne à évincer sélectionnée est la ligne L_{i,j}, l'automate 60 lit le bit Bs_{i,j} associé à cette ligne L_{i,j} par la table Tⱼ. Plus précisément, l'automate 60 lit le bit Bs_{i,j} contenu dans la cellule C_{x,4,j} de la ligne de la table Tⱼ dont la cellule C_{x,1,j} contient la valeur Iw_{j,r} générée lors de l'étape 104, l'indice j étant l'indice du tableau Wⱼ qui contient la ligne L_{i,j} sélectionnée lors de l'opération 132.

Si lors de l'opération 134, le bit Bs_{i,j} indique que cette ligne a été modifiée depuis son enregistrement sur le support 7, alors, lors d'une opération 136, le contenu de son champ D_{i,j} est sauvegardé dans une mémoire de rang supérieure, c'est-à-dire ici dans la mémoire 8.

Ensuite, directement après l'opération 134 si le bit Bs_{i,j} de la ligne à évincer est égal à zéro ou à l'issue de l'opération 136, lors d'une opération 140, l'automate 60 compare la valeur du compteur CNT_{i,j} à un seuil prédéterminé S_{A}. Le compteur CNT_{i,j} est celui associé à la ligne L_{i,j} à évincer par la table Tⱼ. Pour cela, l'automate 60 lit la valeur contenue dans la cellule C_{x,2,j} de la ligne de la table Tⱼ dont la cellule C_{x,1,j} contient la valeur Iw_{j,r} générée lors de l'étape 104, l'indice j étant l'indice du tableau Wⱼ qui contient la ligne L_{i,j} sélectionnée lors de l'opération 132.

Si la valeur du compteur CNT_{i,j} est inférieure au seuil S_{A}, alors, lors d'une opération 142, la ligne L_{i,j} à évincer est remplacée, sur le support 7, par une nouvelle ligne chargée depuis la mémoire de rang supérieure et contenant le mot recherché. Pour cela, la nouvelle ligne est enregistrée sur le support 7 à la place de la ligne à évincer.

Ensuite, lors d'une opération 144, le compteur CNT_{i,j} est incrémenté d'un pas prédéterminé, par exemple, égal à un. Les bits Bv_{i,j} et Bs_{i,j} sont également mis, respectivement, à « 1 » et à « 0 ».

Si la valeur du compteur CNT_{i,j} est supérieure ou égale au seuil S_{A}, à l'issue de l'opération 140, le procédé se poursuit par une opération 150.

Lors de l'opération 150, une nouvelle ligne du tableau Wⱼ, différente de la ligne L_{i,j} à évincer, est sélectionnée. Par exemple, à cet effet, le générateur 48 est utilisé pour tirer au hasard un nombre compris entre 1 et s et différent de la valeur actuelle Iw_{j,r} de l'index Iwⱼ. Par la suite, la valeur ainsi tirée est notée Iw_{j,k}. Par exemple, comme illustré sur la figure 3, cette valeur Iw_{j,k} correspond à une ligne L_{k,j} du tableau Wⱼ, où la valeur de l'indice k est différente de la valeur de l'indice i. La ligne L_{k,j} est associée, par la table Tⱼ, au compteur CNT_{k,j} et aux bits Bv_{k,j} et Bs_{k,j}.

Lors d'une opération 152, l'automate 60 permute, dans la table Tⱼ, les contenus des lignes contenant les valeurs Iw_{j,r} et Iw_{j,k} de l'index Iwⱼ. Lors de l'opération 152, seuls ces deux lignes de la table Tⱼ sont permutées et toutes les autres tables d'indirection restent inchangées. A l'issue de l'opération 152, les cellules de la table Tⱼ situées sur la ligne dont le numéro est égal à I'w_{j,r} contiennent, respectivement, les valeurs Iw_{j,k}, CNT_{k,j}, Bv_{k,j} et Bs_{k,j}. Les cellules de la table Tⱼ situées sur la ligne dont le numéro est égal à I'w_{j,k} contiennent, respectivement, les valeurs Iw_{j,r}, CNT_{i,j}, Bv_{i,j} et Bs_{i,j}. Ainsi, suite à cette modification de la table Tⱼ, maintenant, pour une requête de lecture contenant la même adresse @r, le même identifiant Idᵤ et le même marqueur MP, la valeur de l'index Iwⱼ est égale à Iw_{j,k} et n'est plus égale à Iw_{j,r}. Autrement dit, après l'opération 152, l'ensemble S_{i,r} contient la ligne L_{k,j} à la place de la ligne L_{i,j}.

Ensuite, lors d'une opération 154, les compteurs CNT_{k,j} et CNT_{i,j} sont réinitialisés. Pour cela, ici, ils sont remis à zéro dans la table Tⱼ. De plus, le bit de validité Bv_{i,j} est mis à zéro pour indiquer que la ligne L_{i,j} est désormais invalide.

Enfin, lors d'une opération 156, la ligne L_{k,j} à évincer est remplacée, sur le support 7, par une nouvelle ligne chargée depuis la mémoire de rang supérieure et contenant le mot recherché. Pour cela, si le bit Bs_{k,j} associé à la ligne L_{k,j} est égal à « 1 », alors le contenu du champ D_{k,j} est d'abord sauvegardé dans la mémoire de rang supérieur. Ensuite, la nouvelle ligne est enregistrée sur le support 7 à la place de la ligne L_{k,j}. Les bits Bv_{k,j} et Bs_{k,j} sont alors mis, respectivement, à « 1 » et à « 0 ».

A l'issue de l'étape 130, lors d'une étape 160, le mot recherché est lu dans la mémoire cache à partir de la nouvelle ligne chargée lors de l'opération 142 ou 156.

Dans le cas d'une requête d'écriture d'un mot dans la mémoire cache 6, tous ce qui a été décrit précédemment s'applique sauf que, au lieu de lire le mot recherché dans la mémoire cache, la valeur Vᵣ reçue est écrite dans le mot recherché.

### Chapitre III : Variantes

### Variantes du procédé :

Lors de l'opération 132, d'autres méthodes de sélection de la ligne à évincer sont possibles. Par exemple, dans une variante particulièrement simple, la ligne à évincer est choisie sans tenir compte de l'état des bits de validité Bv_{i,j}. Par exemple, la ligne à évincer est choisie de façon aléatoire ou pseudo aléatoire parmi les W lignes de l'ensemble S_{i,r}. Dans ce cas, le bit de validité Bv_{i,j} peut être omis.

La permutation de deux lignes de la table Tⱼ au cours de l'exécution du processus, peut être déclenchée différemment. En particulier, l'utilisation des compteurs CNT_{i,j} peut être omise. Par exemple, en variante, la permutation des deux valeurs Iw_{i,j} et Iw_{k,j} de l'index Iwⱼ dans la table Tⱼ est automatiquement déclenchée de façon aléatoire en réponse à un défaut de cache. Par exemple, l'opération 140 est remplacée par une opération lors de laquelle un nombre est tirée de façon aléatoire. Si ce nombre est supérieur ou égal au seuil S_{A}, les opérations 150, 152 et 156 sont exécutées. Dans le cas contraire, c'est l'opération 142 qui est exécutée. Dans ce cas, l'opération 144 d'incrémentation du compteur CNT_{i,j} et l'opération 154 de réinitialisation des compteurs sont omises. Dans un autre mode de réalisation, l'unité 14 comporte une minuterie qui décompte une durée T44. À chaque fois que la durée T44 s'est écoulée, en réponse au prochain défaut de cache, la permutation des deux lignes de la table Tⱼ est déclenchée. Ainsi, dans ce cas, l'intervalle de temps entre deux permutations de deux lignes des tables Tⱼ est indépendant du nombre de défauts de cache. Dans un autre mode de réalisation, c'est un autre événement qu'un défaut de cache qui est compté pour déclencher la permutation de deux lignes de la table Tⱼ. Par exemple, l'exécution des opérations 150 et 152 est systématiquement déclenchée après un nombre prédéterminé de « hit » ou sur la base de tout autre critère. Dans une autre variante simplifiée, l'exécution des opérations 150, 152 à 156 est déclenchée à chaque fois qu'un défaut de cache se produit. Dans ce cas, les opérations 140, 142, 144 et 154 sont omises.

Lors des opérations 142 et 156 au lieu de copier seulement la ligne de la mémoire de rang supérieure qui contient le mot recherché dans la mémoire cache 6, W lignes sont copiées de la mémoire de rang supérieure dans les W lignes de l'ensemble S_{i,r}. Typiquement, c'est W lignes sont adjacentes, dans la mémoire de rang supérieur, à la ligne qui contient le mot recherché.

Lors de l'opération 150, la sélection de la nouvelle ligne L_{k,j} dans le tableau Tⱼ, n'est pas nécessairement réalisée de façon aléatoire ou pseudo-aléatoire. Par exemple, en variante, la nouvelle ligne est sélectionnée en mettant en œuvre une fonction déterministe qui, à chaque valeur d'une variable d'entrée, associe une valeur déterminée Iw_{k,j} respective de l'index Iwⱼ. La valeur de la variable d'entrée est déterminée à partir d'une ou plusieurs valeurs connues au moment où la nouvelle ligne doit être sélectionnée. Par exemple, il peut s'agir d'une valeur construite à partir des valeurs contenues dans la requête de lecture ou d'écriture reçue. Toutefois, d'autres valeurs connues de l'unité 14 que celles contenues dans la requête de lecture ou d'écriture peuvent être utilisées pour cela.

Lors de l'opération 144, d'autres valeurs sont possibles pour le pas d'incrément du compteur CNT_{i,j}. En particulier, le pas d'incrément peut aussi être négatif. Dans ce cas, la valeur initiale du compteur CNT_{i,j} affectée à ce compteur lors de l'opération 154 est une valeur supérieure au seuil S_{A}.

### Variantes du générateur des valeurs d'index Iwⱼ :

L'étiquette Tᵣ peut être construite aussi bien à partir de l'adresse @rᵣ physique du mot recherché que de l'adresse @rᵥ virtuelle de ce mot recherché. En effet, il est toujours possible de convertir une adresse physique en une adresse virtuelle et vice-versa. C'est typiquement la fonction de l'unité de gestion de mémoire connue sous l'acronyme MMU (« Memory Management Unit »). Ainsi, si au moment où l'unité 14 reçoit la requête de lecture ou en écriture d'un mot, l'adresse @rᵣ physique est connue, alors l'unité 14 utilise cette adresse @rᵣ pour en extraire l'adresse @_{Si,r}, l'étiquette Tᵣ et l'indice dᵣ. Cette situation se rencontre pratiquement systématiquement si la mémoire cache 6 est une mémoire cache L2 ou supérieur. Dans le cas où la mémoire cache 6 est une mémoire cache L1, il se peut qu'au moment où l'unité 14 reçoit cette requête, seule l'adresse virtuelle @rᵥ soit disponible. Dans ce cas, le générateur 40 utilise l'adresse @rᵥ pour en extraire l'étiquette Tᵣ et l'adresse @_{Si,r}. Ainsi, dans ce cas, les valeurs Iw_{j,r} sont générées à partir de l'adresse virtuelle @rᵥ et non pas à partir de l'adresse physique @rᵣ. En cours de route, l'adresse physique @rᵥ devient disponible et, notamment, les étapes 122, 124 et 126 sont réalisées en utilisant cette adresse physique et non pas l'adresse virtuelle du mot à lire ou à écrire.

Le générateur 40 peut prendre en compte d'autres informations supplémentaires contenues dans la requête de lecture ou d'écriture pour générer les valeurs des index Iwⱼ. Par exemple, le générateur peut en plus utiliser l'indice dᵣ.

A l'inverse, le générateur 40 peut aussi prendre ne compte moins d'informations que celles décrites précédemment pour générer les valeurs des index Iwⱼ. Par exemple, systématiquement, l'étiquette Tᵣ n'est pas prise en compte pour générer les valeurs Iw_{j,r} des index Iwⱼ. Dans une autre variante très simplifiée, les identifiants Idᵤ de processus sont omis et ne sont jamais utilisés pour construire les valeurs Iw_{j,r} des index Iwⱼ de ligne.

Lors de l'étape 110, pour partager le mot recherché entre plusieurs processus, si nécessaire, l'étiquette Tᵣ est remplacée par une valeur constante et identique pour tous les processus. Cela peut être nécessaire si l'étiquette Tᵣ est extraite de l'adresse virtuelle @rᵥ et non pas de l'adresse physique @rᵣ du mot recherché.

Dans un autre mode de réalisation, le marqueur MP de mémoire partagé est omis. Dans ce cas, il n'est pas possible de partager un mot enregistré dans la mémoire cache entre plusieurs processus simultanément exécuté par le calculateur. Pour cela, typiquement, l'identifiant Idᵤ de chaque processus exécuté est systématiquement utilisé pour générer les valeurs des index Iwⱼ.

D'autres modes de réalisation du circuit cryptographique 42 sont possibles. Par exemple, le circuit 42 peut exécuter une fonction cryptographique plus complexe que celle précédemment décrite pour générer les valeurs intermédiaires I'w_{j,r}. Par exemple, la fonction cryptographique exécutée par le circuit 42 peut être identique à la fonction IDF utilisée dans la solution Scattercache. A l'inverse, de préférence, la fonction cryptographique peut aussi être plus simple que celle précédemment décrite. Par exemple, le permutateur 72 ou les circuits 76 à 79 de substitution sont omis.

La clé k peut aussi être omise. Dans ce cas, les valeurs Iw_{j,r} générées sont indépendantes de cette clé k.

Dans une variante très simplifiée, le circuit cryptographique 42 est omis. Par exemple, dans ce cas, les valeurs intermédiaires I'w_{j,r} sont toutes prises égales à l'adresse @_{Si,r}.

Le nombre de tables d'indirection utilisées n'est pas nécessairement égal à W. Par exemple, pour économiser de la mémoire, en variante, le nombre de tables d'indirection est inférieur à W. Dans ce cas, plusieurs index Iwⱼ sont associés à une même table Tₖ d'indirection commune à ces index Iwⱼ. Dès lors, la même table Tₖ est utilisée, pour plusieurs index Iwⱼ différents, pour transformer la valeur intermédiaire l'w_{j,r} de cet index Iwⱼ en une valeur finale correspondante Iw_{j,r}. Cela permet quand même d'obtenir différentes valeurs Iw_{j,r} pour ces différents index Iwⱼ car les valeurs intermédiaires I'w_{j,r} sont différentes les unes des autres. Dans un cas extrême, une seule table d'indirection associée à tous les index Iwⱼ est utilisée.

### Autres variantes :

En variante, les compteurs CNT_{i,j} et/ou les bits « dirty » Bs_{i,j} et/ou les bits de validités Bv_{i,j} sont enregistrés directement sur le support 7 et non pas dans les tables d'indirection Tⱼ. Typiquement, dans ce cas, le compteur CNT_{i,j}, le bit Bs_{i,j} et le bit Bv_{i,j} associés à la ligne L_{i,j} sont enregistrés directement dans cette ligne sur le support 7 à des emplacements prédéfinis et distincts du ou des mots contenus dans cette même ligne L_{i,j}.

Ici, les expressions « bit de validité » et « bit sale » désignent chacun une information codable à l'aide d'un seul bit. Toutefois, en variante, bien que l'information soit codable à l'aide d'un seul bit, il est possible de la coder sur plusieurs bits.

En variante, la valeur du seuil S_{A} est ajustée dynamiquement par le calculateur au cours de l'exécution du processus. Par exemple, le calculateur relève le taux actuel de défaut de cache. Si le taux actuel de défaut de cache franchit un seuil, alors la valeur du seuil S_{A} est abaissée pour permuter plus fréquemment deux valeurs de la table d'indirection.

La mémoire cache peut être divisée en différents niveaux de mémoire cache traditionnellement appelés « cache L1 », « cache L2 », « cache L3 »,... etc. Les temps d'accès à ces différents niveaux augmentent en allant de la cache L1 vers la cache L3. De plus, ces différents niveaux de mémoire cache ne sont pas nécessairement implantés sur une même puce (« die » en anglais). Par exemple, la cache L1 peut être implémentée à l'intérieur du microprocesseur 4 tandis que les niveaux supérieurs sont implémentés à l'extérieur du microprocesseur 4. Les procédés de gestion d'une mémoire cache décrits ici sont applicables à chacun de ces niveaux de mémoire cache. De préférence, les procédés décrits ici sont appliqués à chacun de ces niveaux.

Le nombre W de tableau Wⱼ peut être égal à un, deux ou trois ou bien être supérieur à quatre ou six.

L'enseignement donné ici s'applique aussi aux cas des mémoires caches à correspondance directe (« direct mapped » en anglais). Dans ce cas, le nombre W est égal à un et l'adresse @_{Si,r} correspond à une seule ligne de la mémoire cache.

La mémoire de masse peut être située à l'extérieur du calculateur et raccordée à ce calculateur par un bus ou un réseau de transmission d'informations. De même, la mémoire principale peut elle aussi être mécaniquement située à l'extérieur du calculateur et raccordée à ce calculateur par un bus ou un réseau de transmission d'informations.

Ce qui a été décrit ici s'applique à d'autres longueurs de mot et de lignes.

Dans un autre mode de réalisation, l'indice dᵣ est omis dans la requête de lecture d'un mot dans la mémoire cache. Dans ce cas, en cas de correspondance entre l'étiquette Tᵣ et l'une des étiquettes T_{i,j}, la mémoire cache 6 envoie au microprocesseur 4 le champ D_{i,j} complet. C'est ensuite le microprocesseur 4 qui procède lui-même à l'extraction du mot souhaité dans le champ D_{i,j} reçu.

Au lieu de comporter un seul microprocesseur, le calculateur électronique peut comporter plusieurs microprocesseurs chacun capable d'accéder à la mémoire cache 6. Dans ce cas, chaque processus exécuté en parallèle des autres est, par exemple, exécuté par son propre microprocesseur. Ce qui a été décrit ici dans le cas particulier où les différents processus sont exécutés, en parallèle, par le même microprocesseur 4 fonctionne de la même façon dans le cas d'un tel calculateur électronique équipé de plusieurs microprocesseurs.

Plusieurs des modes de réalisation décrits ici peuvent être combinés entre eux pour obtenir un nouveau mode de réalisation.

### Chapitre III : Avantages des modes de réalisation

Le fait d'utiliser au moins une table d'indirection Tⱼ pour générer les valeurs Iw_{j,r} des index Iwⱼ et de permuter, en réponse à un défaut de cache, deux valeurs seulement de cette table d'indirection permet de modifier, petit à petit et au cours de l'exécution du processus, la répartition spatiale des lignes de la mémoire cache 6 utilisées par ce processus. Contrairement à un changement de la clé k ou de l'identifiant SDID dans la solution Scattercache, la randomisation spatiale des lignes de la mémoire cache 6 utilisée par le processus n'est pas statique et évolue petit à petit. Ainsi, le ralentissement de l'exécution du processus du à un très grand nombre de défauts de cache suite au changement de la clé k ou de l'identifiant SDID, ne se produit pas. Le procédé de gestion d'une mémoire cache décrit ici permet aussi de simplifier la fonction IDF décrite dans la solution Scattercache sans pour autant amoindrir la sécurité du procédé. En effet, dans le procédé décrit ici, la randomisation spatiale est déjà obtenue par les permutations des valeurs dans les tables d'indirection Tⱼ. Dès lors, il n'est pas en plus nécessaire d'utiliser une fonction cryptographique compliquée pour réaliser le circuit 42. Le procédé décrit ici permet aussi de conserver les avantages du procédé décrit dans la solution Scattercache. En particulier, dans le cas d'une mémoire cache associative, où W est supérieur à un, les lignes correspondant à une même adresse d'ensemble @_{Si,r} ne sont pas situées les unes à côtés des autres dans la mémoire cache et ne sont pas nécessairement situées au même emplacement dans chacun des tableaux Wⱼ. Ainsi, cela permet de conserver unebonne randomisation spatiale de ces lignes à l'intérieur de la mémoire cache toute en y ajoutant une randomisation temporelle. Ici, « randomisation temporelle » désigne le fait de changer fréquemment la randomisation spatiale.

Le déclenchement de la permutation des deux valeurs Iw_{j,r} et Iw_{j,k} de l'index Iwⱼ dans la table d'indirection Tⱼ uniquement lorsque la valeur du compteur CNT_{i,j} associé à la ligne à évincer franchit le seuil S_{A}, permet simplement d'ajuster la fréquence à laquelle les permutations ont lieu au cours de l'exécution du processus. En effet, pour cela, il suffit de modifier la valeur du seuil S_{A}.

Le fait d'enregistrer le compteur CNT_{i,j}, le bit Bs_{i,j} ou le bit Bv_{i,j} de validité dans la table d'indirection Tⱼ plutôt que sur le support 7, permet d'accéder plus rapidement à cette information ce qui accélère l'exécution du processus.

L'utilisation de l'identifiant Idᵤ de processus pour générer les valeurs des index Iwⱼ, permet d'utiliser des lignes de la mémoire cache qui diffèrent en fonction du processus. Ainsi, il est difficile pour un processus attaquant exécuté par le calculateur 2 d'accéder simplement aux lignes utilisées par un autre processus simultanément exécuté. De plus, pour atteindre ce résultat, il n'est pas nécessaire de partitionner la mémoire cache entre les différents processus exécutés.

Le fait de ne pas prendre en compte l'identifiant Idᵤ de processus pour générer les valeurs des W index Iwⱼ lorsque le marqueur MP de mémoire partagé est dans l'état actif, permet de partager un mot enregistré dans la mémoire cache entre plusieurs processus.

La sélection aléatoire ou pseudo-aléatoire de la nouvelle ligne L_{k,j} permet de rendre plus imprédictible l'emplacement de cette nouvelle ligne dans la mémoire cache. Cela rend donc l'identification des lignes de la mémoire cache utilisées par un processus attaqué plus compliquée.

Le fait de commuter systématiquement le bit de validité Bv_{i,j} dans l'état « invalide » après que la ligne L_{i,j} ait été remplacé par la ligne L_{k,j}, permet d'évincer en priorité ces lignes qui ne sont plus utilisées et donc de limiter le nombre de fois où une ligne doit être sauvegardée dans une mémoire de rang supérieur.

Le fait d'utiliser la clé k enregistrée dans la mémoire 38 de l'unité 14 de gestion de la mémoire cache, pour sélectionner une cellule C_{x,1,j} dans la table Tⱼ permet de renforcer la robustesse du procédé. En effet, la clé k n'est connue d'aucun des processus exécutés par le calculateur 2 de sorte qu'il est très difficile de prédire l'emplacement où sont enregistrés les mots dans la mémoire cache 6. De plus, la clé k est enregistrée dans une mémoire 38 qui n'est pas accessible par les processus exécutés.

## Revendications

1. Procédé de gestion d'une mémoire cache d'un calculateur électronique, ce procédé comportant les étapes suivantes au cours de l'exécution par ce calculateur d'un processus qui doit traiter un mot :
a) la réception (100) d'une requête contenant une adresse du mot à lire ou à écrire, cette adresse comprenant :
- une étiquette de ligne reçue,
- une adresse d'ensemble reçue, cette adresse d'ensemble reçue appartenant à un premier ensemble de s valeurs différentes, où le nombre s est un nombre entier supérieur à deux, puis
b) la génération (104), en fonction de l'adresse d'ensemble reçue lors de l'étape a), d'une première valeur respective pour chaque index de ligne d'un groupe de W index de ligne différents, où W est un nombre entier prédéterminé supérieur ou égal à un, chaque index de ligne pointant sur un tableau respectif de s lignes différentes de la mémoire cache et sa valeur identifiant de façon unique une seule ligne du tableau sur lequel il pointe, chaque ligne identifiée par la première valeur d'un index de ligne comportant une étiquette de ligne préenregistrée, puis
c) la comparaison (122) de l'étiquette de ligne reçue aux étiquettes de ligne des lignes identifiées par les premières valeurs des W index de ligne générées lors de l'étape b), pour déterminer si l'une de ces étiquettes de ligne correspond à l'étiquette de ligne reçue,
d) lorsque aucune des étiquettes de ligne comparées lors de l'étape c) ne correspond à l'étiquette de ligne reçue, le déclenchement d'un défaut de cache et la fourniture du mot à partir d'une mémoire de rang supérieur, et lorsque, au contraire, l'une des étiquettes de ligne comparées lors de l'étape c) correspond à l'étiquette de ligne reçue, la lecture (124) ou l'écriture dans la mémoire cache du mot à l'intérieur de la ligne contenant l'étiquette de ligne qui correspond à l'étiquette de ligne reçue,
**caractérisé en ce que** :
- l'étape b) comporte, pour chacun des W index de ligne, la sélection (112), en fonction de l'adresse d'ensemble reçue lors de l'étape a), d'une première cellule dans une première colonne d'une table d'indirection préenregistrée associée à cet index de ligne et l'utilisation, en tant que première valeur générée pour cet index de ligne, de la valeur contenue dans cette première cellule,
- lors de l'étape d), en réponse au déclenchement d'un défaut de cache, le procédé comporte les opérations suivantes :
d1) l'enregistrement (156) du mot fourni à partir de la mémoire de rang supérieur dans une nouvelle ligne identifiée par une seconde valeur de l'index de ligne qui pointe sur le tableau contenant cette nouvelle ligne, cette seconde valeur étant différente de la première valeur de cet index de ligne générée lors de l'étape b) et étant contenue dans une seconde cellule de la première colonne de la table d'indirection associée à cet index de ligne, cette seconde cellule étant différente de la première cellule, et
d2) la permutation (152), dans la première colonne de la table d'indirection associée à l'index de ligne qui pointe sur le tableau contenant la nouvelle ligne, seulement des valeurs contenues dans les première et seconde cellules de sorte qu'après cette permutation la première cellule contient la seconde valeur et la seconde cellule contient la première valeur.

2. Procédé selon la revendication 1, dans lequel, lors de l'étape d), en réponse au déclenchement d'un défaut de cache, le procédé comporte :
- la sélection (132) d'une ligne à évincer parmi les W lignes identifiées par les premières valeurs des W index de ligne générées lors de l'étape b), puis
- la comparaison (140) d'un compteur associé à la ligne à évincer sélectionnée, à une seuil prédéterminé, et
- lorsqu'il résulte de cette comparaison que la valeur de ce compteur a franchi le seuil prédéterminé, l'exécution des opérations d1) et d2) et la réinitialisation (154) de ce compteur et, à l'inverse, lorsqu'il résulte de cette comparaison que la valeur de ce compteur n'a pas encore franchi le seuil prédéterminé, l'enregistrement (142) du mot fourni à partir de la mémoire de rang supérieur, dans la ligne à évincer sélectionnée et l'incrémentation (144) du compteur associé à cette ligne à évincer.

3. Procédé selon la revendication 2, dans lequel le compteur est enregistré dans une deuxième colonne de la table d'indirection associée à l'index de ligne qui pointe sur le tableau contenant la ligne à évincer.

4. Procédé selon l'une quelconque des revendications précédentes, dans lequel le procédé comporte :
- l'utilisation d'un bit sale associé à chaque ligne de la mémoire cache pour déterminer si, avant d'évincer cette ligne de la mémoire cache, il faut d'abord sauvegarder le ou les mots contenus dans cette ligne dans une mémoire de rang supérieur, et
- l'enregistrement (156) du bit sale associé à chaque ligne de la mémoire cache dans une troisième colonne de la table d'indirection associée à l'index de ligne qui pointe sur le tableau contenant cette ligne.

5. Procédé selon l'une quelconque des revendications précédentes, dans lequel le procédé comporte :
- l'utilisation d'un bit de validité associé à chaque ligne de la mémoire cache pour déterminer si cette ligne doit être sélectionnée en priorité pour être évincée de la mémoire cache, et
- l'enregistrement (154, 156) du bit de validité associé à chaque ligne de la mémoire cache dans une quatrième colonne de la table d'indirection associée à l'index de ligne qui pointe sur le tableau contenant cette ligne.

6. Procédé selon l'une quelconque des revendications précédentes, dans lequel :
- lors de l'étape a), la requête reçue comporte également un identifiant de processus reçu qui distingue le processus qui a émis cette requête de tous les autres processus simultanément exécutés par le calculateur électronique,
- lors de l'étape b), les premières valeurs des W index de ligne sont également générées en fonction de l'identifiant de processus reçu lors de l'étape a).

7. Procédé selon la revendication 6, dans lequel :
- lors de l'étape a), la requête reçue comporte également un marqueur de mémoire partagée qui indique si le mot à lire ou à écrire est ou non partagé avec d'autres processus simultanément exécutés par le calculateur électronique, et
- lors de l'étape b), lorsque le marqueur de mémoire partagé indique que le mot à lire ou à écrire n'est pas partagé avec d'autres processus simultanément exécutés par le calculateur électronique, les premières valeurs des W index de ligne sont également générées en fonction de l'identifiant de processus reçu lors de l'étape a) et, sinon, lorsque le marqueur de mémoire partagé indique que le mot à lire ou à écrire est partagé avec d'autres processus simultanément exécutés par le calculateur électronique, les premières valeurs des W index de ligne sont générées sans prendre en compte l'identifiant de processus reçu lors de l'étape a).

8. Procédé selon l'une quelconque des revendications précédentes, dans lequel l'opération d1) comporte la sélection aléatoire ou pseudo-aléatoire de la nouvelle ligne parmi les lignes d'un tableau différentes de la ligne identifiée par la première valeur de l'index de ligne qui pointe sur ce tableau.

9. Procédé selon l'une quelconque des revendications précédentes, dans lequel le procédé comporte :
- l'utilisation d'un bit de validité associé à chaque ligne de la mémoire cache pour déterminer si cette ligne doit être sélectionnée en priorité pour être évincée de la mémoire cache, ce bit de validité étant commutable entre :
- un état « invalide » où il indique que cette ligne doit être sélectionnée en priorité pour être évincée de la mémoire cache, et
- un état « valide » où il indique que cette ligne ne doit pas être sélectionnée en priorité pour être évincée de la mémoire cache,
- en réponse à l'exécution de l'opération d2), le bit de validité associé à la ligne de la mémoire cache identifiée par la première valeur de l'index de ligne qui pointe sur le tableau contenant la nouvelle ligne, est systématiquement mis (154) dans l'état « invalide ».

10. Procédé selon l'une quelconque des revendications précédentes, dans lequel W est supérieur ou égale à deux.

11. Procédé selon la revendication 10, dans lequel chaque index de ligne est associé à sa propre table d'indirection.

12. Procédé selon l'une quelconque des revendications précédentes, dans lequel l'étape b) comporte pour chaque index de ligne :
- la construction (108, 110) d'une valeur intermédiaire de cet index de ligne à partir de l'adresse d'ensemble reçue lors de l'étape a) et d'une clé cryptographique secrète contenue dans une mémoire non-volatile inaccessible par les processus exécutés par le calculateur, puis
- la sélection (112), en fonction de l'adresse d'ensemble reçue lors de l'étape a), d'une première cellule dans une première colonne de la table d'indirection préenregistrée associée à cet index de ligne, consiste à sélectionner la cellule de cette table d'indirection qui se trouve sur la ligne de cette table d'indirection dont l'indice est égal à la valeur intermédiaire construite pour cet index de ligne.

13. Unité matérielle de gestion d'une mémoire cache d'un calculateur électronique, cette unité étant configurée pour réaliser les étapes suivantes au cours de l'exécution par ce calculateur d'un processus qui doit traiter un mot :
a) la réception d'une requête contenant une adresse du mot à lire ou à écrire, cette adresse comprenant :
- une étiquette de ligne reçue,
- une adresse d'ensemble reçue, cette adresse d'ensemble reçue appartenant à un premier ensemble de s valeurs différentes, où le nombre s est un nombre entier supérieur à deux, puis
b) la génération, en fonction de l'adresse d'ensemble reçue lors de l'étape a), d'une première valeur respective pour chaque index de ligne d'un groupe de W index de ligne différents, où W est un nombre entier prédéterminé supérieur ou égal à un, chaque index de ligne pointant sur un tableau respectif de s lignes différentes de la mémoire cache et sa valeur identifiant de façon unique une seule ligne du tableau sur lequel il pointe, chaque ligne identifiée par la première valeur d'un index de ligne comportant une étiquette de ligne préenregistrée, puis
c) la comparaison de l'étiquette de ligne reçue aux étiquettes de ligne des lignes identifiées par les premières valeurs des W index de ligne générées lors de l'étape b), pour déterminer si l'une de ces étiquettes de ligne correspond à l'étiquette de ligne reçue,
d) lorsque aucune des étiquettes de ligne comparées lors de l'étape c) ne correspond à l'étiquette de ligne reçue, le déclenchement d'un défaut de cache et la fourniture du mot à partir d'une mémoire de rang supérieur, et lorsque, au contraire, l'une des étiquettes de ligne comparées lors de l'étape c) correspond à l'étiquette de ligne reçue, la lecture ou l'écriture dans la mémoire cache du mot à l'intérieur de la ligne contenant l'étiquette de ligne qui correspond à l'étiquette de ligne reçue,
**caractérisé en ce que** l'unité matérielle de gestion est également configurée pour :
- lors de l'étape b), pour chacun des W index de ligne, sélectionner, en fonction de l'adresse d'ensemble reçue lors de l'étape a), d'une première cellule dans une première colonne d'une table d'indirection préenregistrée associée à cet index de ligne et utiliser, en tant que première valeur générée pour cet index de ligne, de la valeur contenue dans cette première cellule,
- lors de l'étape d), en réponse au déclenchement d'un défaut de cache, exécuter les opérations suivantes :
d1) enregistrer le mot fourni à partir de la mémoire de rang supérieur dans une nouvelle ligne identifiée par une seconde valeur de l'index de ligne qui pointe sur le tableau contenant cette nouvelle ligne, cette seconde valeur étant différente de la première valeur de cet index de ligne générée lors de l'étape b) et étant contenue dans une seconde cellule de la première colonne de la table d'indirection associée à cet index de ligne, cette seconde cellule étant différente de la première cellule, et
d2) permuter, dans la première colonne de la table d'indirection associée à l'index de ligne qui pointe sur le tableau contenant la nouvelle ligne, seulement des valeurs contenues dans les première et seconde cellules de sorte qu'après cette permutation la première cellule contient la seconde valeur et la seconde cellule contient la première valeur.

## Patentansprüche

1. Verfahren zur Verwaltung eines Cache-Speichers eines elektronischen Rechners, wobei dieses Verfahren während der Ausführung durch diesen Rechner eines Prozesses, der ein Wort verarbeiten soll, die folgenden Schritte umfasst:
a) Empfangen (100) einer Abfrage, die eine Adresse des zu lesenden oder zu schreibenden Wortes enthält, wobei diese Adresse aufweist:
- ein empfangenes Zeilenetikett,
- eine empfangene Mengenadresse, wobei diese Mengenadresse zu einer ersten Menge von verschiedenen Werten gehört, wo die Anzahl s eine ganze Zahl größer als zwei ist, dann
b) Erzeugen (104) in Abhängigkeit von der in Schritt a) empfangenen Mengenadresse eines jeweiligen ersten Wertes für jeden Zeilenindex einer Gruppe von W verschiedenen Zeilenindizes, wobei W eine vorgegebene ganze Zahl größer oder gleich eins ist, wobei jeder Zeilenindex auf eine jeweilige Tabelle der verschiedenen Zeilen des Cache-Speichers zeigt und sein Wert eine einzelne Zeile der Tabelle, auf die er zeigt, auf eindeutige Weise identifiziert, wobei jede durch den ersten Wert eines Zeilenindex identifizierte Zeile ein vorher gespeichertes Zeilenetikett umfasst, dann
c) Vergleichen (122) des empfangenen Zeilenetiketts mit den Zeilenetiketten der durch die in Schritt b) erzeugten ersten Werte der W Zeilenindizes identifizierten Zeilen, um zu ermitteln, ob eines dieser Zeilenetikette mit dem empfangenen Zeilenetikett übereinstimmt,
d) wenn keines der in Schritt c) verglichenen Zeilenetikette mit dem empfangenen Zeilenetikett übereinstimmt, Auslösen eines Cache-Fehlers und Bereitstellen des Wortes aus einem Speicher höherer Ordnung, und wenn im Gegenteil eines der in Schritt c) verglichenen Zeilenetiketten mit dem empfangenen Zeilenetikett übereinstimmt, Lesen (124) oder Schreiben in dem Cache-Speicher des Wortes innerhalb der Zeile, die das Zeilenetikett umfasst, das mit dem empfangenen Zeilenetikett übereinstimmt,
**dadurch gekennzeichnet, dass**:
- Schritt b) für jeden der W Zeilenindizes Auswählen (112) in Abhängigkeit von der in Schritt a) empfangenen Mengenadresse einer ersten Zelle in einer ersten Spalte einer vorher gespeicherten, diesem Zeilenindex zugeordneten Indirektionstabelle und Verwenden des in dieser ersten Zelle enthaltenen Wertes als ersten für diesen Zeilenindex erzeugten Wert umfasst,
- in Schritt d) das Verfahren als Reaktion auf das Auslösen eines Cache-Fehlers die folgenden Operationen umfasst:
d1)Speichern (156) des aus dem Speicher höherer Ordnung bereitgestellten Wortes in einer neuen Zeile, die durch einen zweiten Wert des Zeilenindex identifiziert wird, der auf die diese neue Zeile umfassende Tabelle zeigt, wobei dieser zweite Wert von dem in Schritt b) erzeugten ersten Wert dieses Zeilenindex verschieden ist und in einer zweiten Zelle der ersten Spalte der diesem Zeilenindex zugeordneten Indirektionstabelle enthalten ist, wobei diese zweite Zelle von der ersten Zelle verschieden ist, und
d2)Vertauschen (152) in der ersten Spalte der Indirektionstabelle, die dem Zeilenindex zugeordnet ist, der auf die die neue Zeile enthaltende Tabelle zeigt, nur der in der ersten und zweiten Zelle enthaltenen Werte, so dass nach diesem Vertauschen die erste Zelle den zweiten Wert enthält und die zweite Zelle den ersten Wert enthält.

2. Verfahren nach Anspruch 1, wobei das Verfahren in Schritt d) als Reaktion auf das Auslösen eines Cache-Fehlers umfasst :
- Auswählen (132) einer auszuschließenden Zeile aus den durch die ersten Werte der in Schritt b) erzeugten W Zeilenindizes identifizierten W Zeilen, dann
- Vergleichen (140) eines der ausgewählten, auszuschließenden Zeile zugeordneten Zählers mit einem vorgegebenen Schwellenwert und
- wenn sich aus diesem Vergleich ergibt, dass der Wert dieses Zählers den vorgegebenen Schwellenwert überschritten hat, Ausführen der Operationen d1) und d2) und Reinitialisieren (154) dieses Zählers, und umgekehrt, wenn sich aus diesem Vergleich ergibt, dass der Wert dieses Zählers den vorgegebenen Schwellenwert noch nicht überschritten hat, Speichern (142) des aus dem Speicher höherer Ordnung bereitgestellten Wortes in der ausgewählten, auszuschließenden Zeile und Inkrementieren (144) des dieser auszuschließenden Zeile zugeordneten Zählers.

3. Verfahren nach Anspruch 2, wobei der Zähler in einer zweiten Spalte der Indirektionstabelle gespeichert wird, die dem Zeilenindex zugeordnet ist, der auf die die auszuschließende Zeile enthaltende Tabelle zeigt.

4. Verfahren nach einem der vorhergehenden Ansprüche, wobei das Verfahren umfasst:
- Verwenden eines jeder Zeile des Cache-Speichers zugeordneten unreinen Bits, um zu ermitteln, ob vor Ausschließen dieser Zeile aus dem Cache-Speicher zunächst das oder die in dieser Zeile enthaltenen Wörter in einem Speicher höherer Ordnung gesichert werden müssen, und
- Speichern (156) des jeder Zeile des Cache-Speichers zugeordneten unreinen Bits in einer dritten Spalte der Indirektionstabelle, die dem Zeilenindex zugeordnet ist, der auf die diese Zeile enthaltende Tabelle zeigt.

5. Verfahren nach einem der vorhergehenden Ansprüche, wobei das Verfahren umfasst:
- Verwenden eines jeder Zeile des Cache-Speichers zugeordneten Gültigkeitsbits, um zu ermitteln, ob diese Zeile vorrangig ausgewählt werden soll, um aus dem Cache-Speicher ausgeschlossen zu werden, und
- Speichern (154, 156) des jeder Zeile des Cache-Speichers zugeordneten Gültigkeitsbits in einer vierten Spalte der Indirektionstabelle, die dem Zeilenindex zugeordnet ist, der auf die diese Zeile enthaltende Tabelle zeigt.

6. Verfahren nach einem der vorhergehenden Ansprüche, wobei:
- in Schritt a) die empfangene Abfrage auch eine empfangene Prozesskennung umfasst, die den Prozess, der diese Abfrage ausgegeben hat, von allen anderen, gleichzeitig von dem elektronischen Rechner ausgeführten Prozessen unterscheidet,
- in Schritt b) die ersten Werte der W Zeilenindizes auch in Abhängigkeit von der in Schritt a) empfangenen Prozesskennung erzeugt werden.

7. Verfahren nach Anspruch 6, wobei:
- in Schritt a) die empfangene Abfrage auch eine Markierung für gemeinsam genutzten Speicher umfasst, die angibt, ob das zu lesende oder zu schreibende Wort mit anderen Prozessen, die gleichzeitig von dem elektronischen Rechner ausgeführt werden, gemeinsam genutzt wird oder nicht, und
- in Schritt b), wenn die Markierung für gemeinsam genutzten Speicher angibt, dass das zu lesende oder zu schreibende Wort nicht mit anderen gleichzeitig von dem elektronischen Rechner ausgeführten Prozessen genutzt wird, die ersten Werte der W Zeilenindizes auch in Abhängigkeit von der in Schritt a) empfangenen Prozesskennung erzeugt werden, und andernfalls, wenn die Markierung für gemeinsam genutzten Speicher angibt, dass das zu lesende oder zu schreibende Wort mit anderen gleichzeitig von dem elektronischen Rechner ausgeführten Prozessen gemeinsam genutzt wird, die ersten Werte der W Zeilenindizes ohne Berücksichtigung der in Schritt a) empfangenen Prozesskennung erzeugt werden.

8. Verfahren nach einem der vorhergehenden Ansprüche, wobei die Operation d1) zufälliges oder pseudozufälliges Auswählen der neuen Zeile aus den Zeilen einer Tabelle umfasst, die von der Zeile verschieden sind, die durch den ersten Wert des Zeilenindex identifiziert wird, der auf diese Tabelle zeigt.

9. Verfahren nach einem der vorhergehenden Ansprüche, wobei das Verfahren umfasst:
- Verwenden eines jeder Zeile des Cache-Speichers zugeordneten Gültigkeitsbits, um zu ermitteln, ob diese Zeile vorrangig ausgewählt werden soll, um aus dem Cache-Speicher ausgeschlossen zu werden, wobei dieser Gültigkeitsbit umwandelbar ist zwischen:
- einem "ungültigen" Zustand, in welchem er angibt, dass diese Zeile vorrangig ausgewählt werden soll, um aus dem Cache-Speicher ausgeschlossen zu werden, und
- einem "gültigen" Zustand, in welchem er angibt, dass diese Zeile nicht vorrangig ausgewählt werden soll, um aus dem Cache-Speicher ausgeschlossen zu werden,
- das Gültigkeitsbit, das der Zeile des Cache-Speichers zugeordnet ist, die durch den ersten Wert des Zeilenindex identifiziert wird, der auf die die neue Zeile enthaltende Tabelle zeigt, wird als Reaktion auf die Ausführung der Operation d2) systematisch in den Zustand "ungültig" versetzt (154).

10. Verfahren nach einem der vorhergehenden Ansprüche, wobei W größer oder gleich zwei ist.

11. Verfahren nach Anspruch 10, wobei jeder Zeilenindex seiner eigenen Indirektionstabelle zugeordnet ist.

12. Verfahren nach einem der vorhergehenden Ansprüche, wobei der Schritt b) für jeden Zeilenindex umfasst:
- Erstellen (108, 110) eines Zwischenwerts dieses Zeilenindex aus der in Schritt a) empfangenen Mengenadresse und eines geheimen kryptographischen Schlüssels, der in einem nichtflüchtigen Speicher enthalten ist, der für die durch den Rechner ausgeführten Prozesse unzugreifbar ist, dann
- besteht das Auswählen (112) in Abhängigkeit von der in Schritt a) empfangenen Mengenadresse einer ersten Zelle in einer ersten Spalte der vorher gespeicherten Indirektionstabelle, die diesem Zeilenindex zugeordnet ist, darin, die Zelle dieser Indirektionstabelle auszuwählen, die sich in der Zeile dieser Indirektionstabelle befindet, deren Index gleich dem für diesen Zeilenindex erstellten Zwischenwert ist.

13. Hardwareeinheit zur Verwaltung eines Cache-Speichers eines elektronischen Rechners, wobei diese Einheit ausgelegt ist, während der Ausführung durch diesen Rechner eines Prozesses, der ein Wort verarbeiten soll, die folgenden Schritte umzusetzen:
a) Empfangen einer Abfrage, die eine Adresse des zu lesenden oder zu schreibenden Wortes enthält, wobei diese Adresse aufweist:
- ein empfangenes Zeilenetikett,
- eine empfangene Mengenadresse, wobei diese Mengenadresse zu einer ersten Menge von verschiedenen Werten, wo die Anzahl s eine ganze Zahl größer als zwei ist, dann
b) Erzeugen in Abhängigkeit von der in Schritt a) empfangenen Mengenadresse eines jeweiligen ersten Wertes für jeden Zeilenindex einer Gruppe von W verschiedenen Zeilenindizes, wobei W eine vorgegebene ganze Zahl größer oder gleich eins ist, wobei jeder Zeilenindex auf eine jeweilige Tabelle der verschiedenen Zeilen des Cache-Speichers zeigt und sein Wert eine einzelne Zeile der Tabelle, auf die er zeigt, auf eindeutige Weise identifiziert, wobei jede durch den ersten Wert eines Zeilenindex identifizierte Zeile ein voraufgezeichnetes Zeilenetikett umfasst, dann
c) Vergleichen des empfangenen Zeilenetiketts mit den Zeilenetiketten der durch die in Schritt b) erzeugten ersten Werte der W Zeilenindizes identifizierten Zeilen, um zu ermitteln, ob eines dieser Zeilenetiketten mit dem empfangenen Zeilenetikett übereinstimmt,
d) wenn keines der in Schritt c) verglichenen Zeilenetiketten mit dem empfangenen Zeilenetikett übereinstimmt, Auslösen eines Cache-Fehlers und Bereitstellen des Wortes aus einem Speicher höherer Ordnung, und wenn im Gegenteil eines der in Schritt c) verglichenen Zeilenetiketten mit dem empfangenen Zeilenetikett übereinstimmt, Lesen oder Schreiben in dem Cache-Speicher des Wortes innerhalb der Zeile, die das Zeilenetikett umfasst, das mit dem empfangenen Zeilenetikett übereinstimmt,
**dadurch gekennzeichnet, dass** die Hardwareeinheit auch ausgelegt ist:
- in Schritt b) für jeden der W Zeilenindizes in Abhängigkeit von der in Schritt a) empfangenen Mengenadresse eine erste Zelle in einer ersten Spalte einer vorher gespeicherten, diesem Zeilenindex zugeordneten Indirektionstabelle auszuwählen und den in dieser ersten Zelle enthaltenen Wert als ersten für diesen Zeilenindex erzeugten Wert zu verwenden,
- in Schritt d) als Reaktion auf das Auslösen eines Cache-Fehlers die folgenden Operationen auszuführen:
d1)das aus dem Speicher höherer Ordnung bereitgestellte Wort in einer neuen Zeile, die durch einen zweiten Wert des Zeilenindexes identifiziert wird, der auf die diese neue Zeile umfassende Tabelle zeigt, zu speichern, wobei dieser zweite Wert von dem in Schritt b) erzeugten ersten Wert dieses Zeilenindexes verschieden ist und in einer zweiten Zelle der ersten Spalte der diesem Zeilenindex zugeordneten Indirektionstabelle enthalten ist, wobei diese zweite Zelle von der ersten Zelle verschieden ist, und
d2) in der ersten Spalte der Indirektionstabelle, die dem Zeilenindex zugeordnet ist, der auf die die neue Zeile enthaltende Tabelle zeigt, nur die in der ersten und zweiten Zelle enthaltenen Werte zu vertauschen, so dass nach diesem Vertauschen die erste Zelle den zweiten Wert enthält und die zweite Zelle den ersten Wert enthält.

## Claims

1. Method for managing a cache memory of an electronic computer, this method comprising the following steps during execution by this computer of a process that must process a word:
(a) receiving (100) a request containing an address of the word to be read or written, the address comprising:
- a received line tag,
- a received set address, this received set address belonging to a first set of s different values, where the number s is an integer greater than two, then
b) generating (104), depending on the set address received in step a), a respective first value for each line index of a group of W different line indices, where W is a predetermined integer greater than or equal to one, each line index pointing to one respective way of s different lines of the cache memory and its value uniquely identifying a single line of the way to which it points, each line identified by the first value of a line index comprising a pre-stored line tag, then
c) comparing (122) the received line tag to the line tags of the lines identified by the first values of the W line indices generated in step b), to determine whether any of these line tags corresponds to the received line tag,
d) when none of the line tags compared in step c) corresponds to the received line tag, triggering a cache miss and retrieving the word from a memory of higher rank, and when, conversely, one of the line tags compared in step c) corresponds to the received line tag, reading (124) from or writing to the cache memory the word inside the line containing the line tag that corresponds to the received line tag,
wherein:
- step b) comprises, for each of the W line indices, selecting (112), depending on the set address received in step a), a first cell in a first column of a pre-stored indirection table associated with this line index and using, as first value generated for this line index, the value contained in this first cell,
- in step d), in response to triggering of a cache miss, the method comprises the following operations:
d1) storing (156) the word retrieved from the memory of higher rank in a new line identified by a second line-index value that points to the way containing this new line, this second value being different from the first value of this line index generated in step b) and being contained in a second cell of the first column of the indirection table associated with this line index, this second cell being different from the first cell, and
d2) permutating (152), in the first column of the indirection table associated with the line index that points to the way containing the new line, only values contained in the first and second cells, so that after this permutation the first cell contains the second value and the second cell contains the first value.

2. Method according to Claim 1, wherein, in step d), in response to triggering of a cache miss, the method comprises:
- selecting (132) a line to be removed among the W lines identified by the first values of the W line indices generated in step b), then
- comparing a counter associated with the selected line to be removed, to a predetermined threshold, and
- when this comparison indicates that the value of this counter has crossed the predetermined threshold, executing operations d1) and d2) and resetting (154) this counter and, conversely, when this comparison indicates that the value of this counter has not yet crossed the predetermined threshold, storing (142) the word retrieved from the memory of higher rank in the selected line to be removed and incrementing (144) the counter associated with this line to be removed.

3. Method according to Claim 2, wherein the counter is stored in a second column of the indirection table associated with the line index that points to the way containing the line to be removed.

4. Method according to anyone of the preceding claims, wherein the method comprises:
- using a dirty bit associated with each line of the cache memory to determine whether, before removing that line from the cache memory, the word or words contained in that line must first be saved in a memory of higher rank, and
- storing (156) the dirty bit associated with each line of the cache memory in a third column of the indirection table associated with the line index that points to the way containing that line.

5. Method according to anyone of the preceding claims, wherein the method comprises:
- using a validity bit associated with each line of the cache memory to determine whether that line must be selected as a priority to be removed from the cache memory, and
- storing (154, 156) the validity bit associated with each line of the cache memory in a fourth column of the indirection table associated with the line index that points to the way containing that line.

6. Method according to anyone of the preceding claims, wherein:
- in step a), the received request also comprises a received process identifier that distinguishes the process that issued this request from all the other processes simultaneously executed by the electronic computer,
- in step b), the first values of the W line indices are also generated depending on the process identifier received in step a).

7. Method according to Claim 6, wherein:
- in step a), the received request also comprises a shared memory marker that indicates whether or not the word to be read or written is shared with other processes simultaneously executed by the electronic computer, and
- in step b), when the shared memory marker indicates that the word to be read or written is not shared with other processes simultaneously executed by the electronic computer, the first values of the W line indices are also generated depending on the process identifier received in step a) and, otherwise, when the shared memory marker indicates that the word to be read or written is shared with other processes simultaneously executed by the electronic computer, the first values of the W line indices are generated without taking into account the process identifier received in step a).

8. Method according to anyone of the preceding claims, wherein operation d1) comprises randomly or pseudo-randomly selecting the new line from lines of a way that are different from the line identified by the first value of the line index that points to that way.

9. Method according to anyone of the preceding claims, wherein the method comprises:
- using a validity bit associated with each line of the cache memory to determine whether that line must be selected as a priority to be removed from the cache memory, this validity bit being switchable between:
- an "invalid" state in which it indicates that this line must be selected as a priority to be removed from the cache memory, and
- a "valid" state in which it indicates that this line must not be selected as a priority to be removed from the cache memory, and
- in response to execution of operation d2), the validity bit associated with the line of the cache memory identified by the first value of the line index that points to the way containing the new line is systematically set (154) to the "invalid" state.

10. Method according to anyone of the preceding claims, wherein W is greater than or equal to two.

11. Method according to Claim 10, wherein each line index is associated with its own indirection table.

12. Method according to anyone of the preceding claims, wherein step b) comprises, for each line index:
- constructing (108, 110) an intermediate value of this line index from the set address received in step a) and a secret cryptographic key contained in a non-volatile memory inaccessible by the processes executed by the computer, then
- selecting (112), depending on the set address received in step a), a first cell in a first column of the pre-stored indirection table associated with this line index, this consisting in selecting the cell of this indirection table that is located on the line of this indirection table the index of which is equal to the intermediate value constructed for this line index.

13. Hardware unit for managing a cache memory of an electronic computer, this unit being configured to carry out the following steps during execution by this computer of a process that must process a word:
(a) receiving a request containing an address of the word to be read or written, the address comprising:
- a received line tag,
- a received set address, this received set address belonging to a first set of s different values, where the number s is an integer greater than two, then
b) generating, depending on the set address received in step a), a respective first value for each line index of a group of W different line indices, where W is a predetermined integer greater than or equal to one, each line index pointing to one respective way of s different lines of the cache memory and its value uniquely identifying a single line of the way to which it points, each line identified by the first value of a line index comprising a pre-stored line tag, then
c) comparing the received line tag to the line tags of the lines identified by the first values of the W line indices generated in step b), to determine whether any of these line tags corresponds to the received line tag,
d) when none of the line tags compared in step c) corresponds to the received line tag, triggering a cache miss and retrieving the word from a memory of higher rank, and when, conversely, one of the line tags compared in step c) corresponds to the received line tag, reading from or writing to the cache memory the word inside the line containing the line tag that corresponds to the received line tag,
wherein the managing hardware unit is also configured to:
- in step b), for each of the W line indices, select, depending on the set address received in step a), a first cell in a first column of a pre-stored indirection table associated with this line index and use, as first value generated for this line index, the value contained in this first cell,
- in step d), in response to triggering of a cache miss, execute the following operations:
d1) storing the word retrieved from the memory of higher rank in a new line identified by a second line-index value that points to the way containing this new line, this second value being different from the first value of this line index generated in step b) and being contained in a second cell of the first column of the indirection table associated with this line index, this second cell being different from the first cell, and
d2) permutating, in the first column of the indirection table associated with the line index that points to the way containing the new line, only values contained in the first and second cells, so that after this permutation the first cell contains the second value and the second cell contains the first value.
